# EUROPEAN PATENT APPLICATION

(11) **EP 4 074 183 A1**
(43) Date of publication of application: **19.10.2022**
(21) Application number: 20879685.4
(22) Date of filing: 24.03.2020
(51) Int. Cl.: A23C 1/00, B01D 61/02

(54) **CONCENTRATION METHOD AND EQUIPMENT**

(30) Priority: 23.10.2019 CN 201911014863; 28.02.2020 CN 202010129979; 28.02.2020 CN 202010129991
(71) Applicant: INNER MONGOLIA MENGNIU DAIRY (GROUP) CO., LTD., Hohhot, Inner Mongolia 011500 (CN)
(72) Inventor: YU, Weizhu, Hohhot, Inner Mongolia 011500 (CN); ZHANG, Jie, Hohhot, Inner Mongolia 011500 (CN); FAN, Mengyuan, Hohhot, Inner Mongolia 011500 (CN); YU, Shengbo, Hohhot, Inner Mongolia 011500 (CN); ZHANG, Yonghong, Hohhot, Inner Mongolia 011500 (CN); LIU, Xinghai, Hohhot, Inner Mongolia 011500 (CN); DONG, Heqian, Hohhot, Inner Mongolia 011500 (CN); REN, Xianfeng, Hohhot, Inner Mongolia 011500 (CN); WANG, Hui, Hohhot, Inner Mongolia 011500 (CN); BAI, Ru, Hohhot, Inner Mongolia 011500 (CN); SHI, Hongli, Hohhot, Inner Mongolia 011500 (CN); LIU, Wenting, Hohhot, Inner Mongolia 011500 (CN); WANG, Xu, Hohhot, Inner Mongolia 011500 (CN)
(74) Representative: Bals & Vogel Patentanwälte PartGmbB
(86) International application number: PCT/CN2020/080868
(87) International publication number: WO 2021/077676

(57) **Abstract**

A concentration method and equipment. The concentration method comprises the step of performing reverse osmosis concentration processing on raw milk by using a reverse osmosis membrane. The reverse osmosis concentration processing comprises low-pressure reverse osmosis membrane concentration processing and high-pressure reverse osmosis membrane concentration processing, wherein in the low-pressure reverse osmosis membrane concentration processing, reverse osmosis concentration processing is performed on feeding materials by using a first predetermined pressure, and in the high-pressure reverse osmosis membrane concentration processing, the reverse osmosis concentration processing is performed on the feeding materials by using a second predetermined pressure, the first predetermined pressure being lower than the second predetermined pressure. The concentration equipment comprises a temporary storage unit, a homogenizing unit, and a particular concentration unit.

## Description

### FIELD OF THE INVENTION

The present disclosure relates to a concentration method and device, and in particular, to a concentration method for concentrating a dairy product by using a reverse osmosis technology and a corresponding concentration device.

### BACKGROUND OF THE INVENTION

Concentration is a process in which the solvent in a solution is evaporated and the concentration of the solution is increased. It is widely used in chemical, food, biopharmaceutical and other industries.

In the food industry, concentration is a process of removing part of a solvent (usually water) from a solution, and it is also a partial separation process of a homogeneous mixed solution of a solute and a solvent. Concentration can remove a large amount of water from food, reduce mass and volume, and reduce the cost of food packaging, storage and transportation; concentration can increase the concentration of a product, increase osmotic pressure, reduce water activity, inhibit microbial growth, and extend the guarantee period; concentration can be used as a pretreatment process of drying, crystallization, or complete dehydration; concentration can reduce energy consumption and production cost in the process of food dehydration; concentration can also effectively remove undesirable volatile substances and undesirable flavors, improving product quality. However, during the concentration process, materials will lose some flavors or nutrients. Therefore, it is very important to choose the reasonable concentration method and suitable conditions.

In large-scale production of the food industry, there is a need to concentrate a variety of feed liquids. Concentration can remove water from feed liquids, thereby increasing the content of specific components in the feed liquids; alternatively, concentration can make feed liquids in a state suitable for long-term storage. In order to meet these needs, a variety of concentration methods have been proposed, such as a high-temperature evaporation method. However, this method consumes a large amount of energy to heat feed liquids, and high temperature poses potential risks to the feed liquids, for example, certain ingredients in the feed liquids may be destroyed, thereby making the feed liquids lose their due effectiveness.

At present, commonly used concentration processing devices are usually evaporation device and conventional reverse osmosis device. In the evaporation device, feed liquids are usually added into an evaporation kettle and the evaporation kettle is heated, so that the temperature of the feed liquids in the evaporation kettle reaches the boiling point and the feed liquids are vaporized. The secondary steam generated during the vaporization is continuously discharged to remove water, so that the concentration of the feed liquids is continuously increased until a predetermined concentration is reached. However, because this device uses high temperature and high-pressure to remove water from feed liquids, there are the following disadvantages: (1) the cost of energy consumption is high, the process needs heating to produce a lot of steam, and the energy consumption is large; (2) in the process of concentration, the traditional evaporation device needs to heat feed liquids, in which a low intensity of heating will lead to low evaporation efficiency, and an excessive intensity of heating will lead to the destruction of some active substances and some nutrients that may be contained in the feed liquids; and (3) only 10% of water can be removed by the evaporation device, which often fails to meet the requirements of enterprises for higher concentration degree, so the efficiency of this kind of concentration device is relatively low.

Another kind of concentration device is conventional reverse osmosis device, which is composed of feed liquid distribution network, pure water distribution network, reverse osmosis membrane, pump, etc., so that treated feed liquids pass through a predetermined flow channel, water molecules in the feed liquids are collected to a central water collection pipe through a reverse osmosis membrane, and finally concentrated feed liquids are obtained. However, this concentration device has the following disadvantages: (1) the energy consumption is high, that is to say, with the concentration going on, the total solid content in feed liquids gradually increases, and the power of the operating pump that needs to be provided for the system standby increases in order to overcome the higher osmotic pressure, so the energy consumption increases; (2) due to the limitation of conventional reverse osmosis technology, membrane core and the maximum pressure of device, the concentration multiple that can be realized by the concentration technology is low, about 2 times, which cannot meet higher concentration requirements.

Especially in the dairy industry, the concentration of cow milk will bring many benefits. On the one hand, concentration can increase the solid content of cow milk in dairy products, so as to meet the nutritional needs of consumers; on the other hand, concentration can reduce the volume of cow milk and increase the preservation performance of cow milk, so as to reduce the cost of cow milk preservation and improve the convenience of cow milk transportation, thus overcoming the problem of seasonal and regional differences in milk sources. However, for cow milk, in addition to the above problems caused by conventional concentration methods, it is also necessary to consider that cow milk is a heat sensitive substance, and heat treatment has a great impact on various physical and chemical, microbial and biochemical indicators of cow milk. Therefore, from the perspective of nutrition, the lower the degree of heat treatment, the smaller the impact on product quality. In addition, it is also a problem that must be considered to prevent the overgrowth of microorganisms and bacteria in the process of cow milk concentration.

### SUMMARY OF THE INVENTION

The present invention is made in view of the above problems in the prior art, and provides a concentration method comprising:

A method for concentrating dairy products, comprising the step of performing reverse osmosis concentration treatment on raw milk using a reverse osmosis membrane; wherein the reverse osmosis concentration treatment comprises a low-pressure reverse osmosis membrane concentration treatment and a high-pressure reverse osmosis membrane concentration treatment.

In the method, the low-pressure reverse osmosis membrane concentration treatment uses a first predetermined pressure to perform reverse osmosis concentration treatment on the feed, and the high-pressure reverse osmosis membrane concentration treatment uses a second predetermined pressure to perform reverse osmosis concentration treatment on the feed, wherein the first predetermined pressure is less than the second predetermined pressure.

In one aspect, in the method, the low-pressure reverse osmosis membrane treatment comprises a multi-stage concentration treatment (preferably a from 1- to 14-stage concentration treatment, and more preferably a from 6- to 11-stage concentration treatment).

Preferably, each stage of the low-pressure reverse osmosis membrane treatment uses one or more membrane assemblies.

More preferably, each membrane assembly comprises one or more membranes which are connected in series, in parallel, or in a combination of series and parallel.

On the other hand, in the method, in the multi-stage concentration treatment of the low-pressure reverse osmosis membrane treatment, the pressures used in various stages are different.

Preferably, in the low-pressure reverse osmosis membrane treatment, the pressure used in the first 3 stages is 1 to 50 bar (preferably 1 to 40 bar, more preferably 25 to 35 bar).

Preferably, in the low-pressure reverse osmosis membrane treatment, the pressure used in the fourth and subsequent stages is 30 to 60 bar (preferably 40 to 50 bar, more preferably 43 to 47 bar).

In one aspect, in the method, the high-pressure reverse osmosis membrane treatment comprises a multi-stage concentration treatment (preferably a from 1- to 6-stage concentration treatment, and more preferably a from 2- to 4-stage concentration treatment).

Preferably, each stage of the high-pressure reverse osmosis membrane treatment uses one or more membrane assemblies.

More preferably, each membrane assembly comprises one or more membranes which are connected in series, in parallel, or in a combination of series and parallel.

On the other hand, in the method, in the multi-stage concentration treatment of the high-pressure reverse osmosis membrane treatment, the pressures used in various stages are different.

Preferably, the pressure used in the high-pressure reverse osmosis membrane treatment is 50 to 200 bar (preferably 60 to 80 bar, and more preferably 60 to 65 bar).

In one aspect, the temperature of the feed liquid to be concentrated in the concentration method is below 20 °C (preferably 0 to 15 °C, and more preferably 7 to 15 °C).

Preferably, the temperature of the concentrated feed liquid is maintained below 15 °C, more preferably 10 to 14 °C, by a high-pressure radiator. The high-pressure radiator is arranged at a feed port or a discharge port of the predetermined stage(s) of the high-pressure reverse osmosis membrane treatment unit.

In one aspect, before the step of the reverse osmosis concentration treatment, the method further comprises: i) a temporary storage step; ii) a pretreatment step; and/or iii) a homogenization step.

In one aspect, in the method, the temporary storage step comprises filtration of raw milk; preferably, the filtration is two-stage filtration; more preferably, the filtration pore diameter of the first-stage filtration is 0.990mm to 1.165mm, and the pore diameter of the second-stage filtration is 0.495mm to 0.589mm.

In one aspect, in the method, the pretreatment step comprises a low-temperature sterilization and separation treatment; preferably, the low-temperature sterilization and separation treatment uses two-stage filtration; preferably, the temperature of the sterilization and separation is controlled at 45 to 50 °C.

In one aspect, in the method, the homogenization step uses two-stage homogenization; preferably, the working temperature of the homogenization step is maintained at 10 to 30 °C (more preferably 15 to 20 °C); more preferably, the pressure of the first-stage homogenization is 100 to 140 bar (more preferably 120 bar), and the pressure of the second-stage homogenization is 40 to 60 bar (more preferably 50 bar).

On the other hand, after the step of the reverse osmosis concentration treatment, the method further comprises: v) a cooling step; vi) a filling step; vii) a freezing step; and/or viii) a cleaning step.

In one aspect, the cooling step uses two-stage cooling. Preferably, the first stage of the cooling uses ice water as a refrigerant; preferably, the second stage of the cooling uses a solution of ethylene glycol in water as a refrigerant.

On the other hand, preferably, the temperature of the first stage of the cooling is maintained at 2 to 10 °C (more preferably 4 to 7 °C); preferably, the temperature of the second stage of the cooling is maintained at -1 to -4 °C (more preferably -2 to -3 °C).

On the other hand, the filling temperature of the filling step is maintained at 1 to -4 °C, more preferably -2 to -3 °C.

On the other hand, the freezing temperature of the freezing step is maintained at -10 to -24 °C, more preferably -18 to -22 °C.

In the concentrated dairy product prepared by the concentration method as described above, the total solid content is 30 to 50%, preferably 35 to 45%, and more preferably 40 to 45%.

Preferably, after the concentrated dairy product is diluted to the total solid content level of raw milk according to the concentration ratio, the detected furosine content is 4 to 20 mg/100g protein, preferably 8 to 15 mg/100g protein.

Compared with the concentrated milk produced by thermal concentration, after the concentrated dairy product is diluted to the total solid content level of raw milk according to the concentration ratio, the detected furosine content is reduced by 60 to 80mg/100g protein, which is reduced by 4 to 10 times.

Preferably, after the concentrated dairy product is diluted to the total solid content level of raw milk according to the concentration ratio, the detected retention amount of IgG (immunoglobulin G) is higher than 95% (not detected in concentrated milk produced by the thermal concentrated milk process).

Preferably, after the concentrated dairy product is diluted to the total solid content level of raw milk according to the concentration ratio, the detected retention rate of GMP (glycomacropeptide) is 100% (the content of GMP in the concentrated milk produced by the thermal concentration process is about 65%).

According to another aspect disclosed herein, there is provided a concentration device by which the feed liquid can be efficiently concentrated to a predetermined concentration.

According to one aspect disclosed herein, there is provided a concentration device, which comprises:
a temporary storage unit, which comprises a storage container to store feed liquids to be concentrated;
a homogenization unit, which is arranged downstream of the temporary storage unit, and
applies a predetermined temperature and pressure to the feed liquids, so that the feed liquids are refined and mixed with each other more uniformly under the action of pressure and impact; and
a concentration unit, which is arranged downstream of the homogenization unit and
successively comprises a low-pressure reverse osmosis membrane treatment unit and a high-pressure reverse osmosis membrane treatment unit, wherein the low-pressure reverse osmosis membrane treatment unit performs a reverse osmosis concentration treatment on the feed liquids flowing therethrough at a first predetermined pressure, and the high-pressure reverse osmosis membrane treatment unit performs a reverse osmosis concentration treatment on the feed liquids flowing therethrough at a second predetermined pressure, wherein the first predetermined pressure is less than the second predetermined pressure.

By using low-pressure and high-pressure reverse osmosis membrane treatment units, the concentration efficiency can be improved.

The low-pressure reverse osmosis membrane treatment unit preferably comprises a plurality of stages, and each stage of the low-pressure reverse osmosis membrane treatment unit comprises one or more membrane assemblies, and each membrane assembly comprises one or more membranes which are connected in series, in parallel, or in a combination of series and parallel.

Preferably, in the multi-stage low-pressure reverse osmosis membrane treatment unit, the pressures in various stages are different.

Preferably, the concentration unit further comprises a low-pressure radiator, which is arranged at a feed port or a discharge port of the predetermined stage(s) of the low-pressure reverse osmosis membrane treatment unit to maintain the temperature of the concentrated feed liquid below 15 °C. Further preferably, in the method, the high-pressure reverse osmosis membrane treatment unit comprises a plurality of stages, and each stage of the high-pressure reverse osmosis membrane treatment unit comprises one or more membrane assemblies, and each membrane assembly comprises one or more membranes which are connected in series, in parallel or in a combination of series and parallel.

Preferably, in the multi-stage high-pressure reverse osmosis membrane treatment unit, the pressures in various stages are different.

Preferably, the concentration unit further comprises a high-pressure radiator, which is arranged at a feed port or a discharge port of the predetermined stage(s) of the high-pressure reverse osmosis membrane treatment unit to maintain the temperature of the concentrated feed liquid below 15 °C.

By maintaining the temperature of the feed liquid below 15 °C during the concentration process, on the one hand, the proliferation of bacteria and microorganisms in the feed liquid can be suppressed, and on the other hand, the effect of too low temperature on the life of the reverse osmosis membrane can be avoided.

Through the design of multi-stage concentration, the whole concentration unit can be consisted of 6- to 11-stage concentration modules, in which different modules are designed with different flow channels in size (for each stage membranes) according to the concentration, different viscosity and particle size of concentrated milk to ensure the efficiency of concentration. For the first 2 to 4 stages, because the concentration of concentrated milk is low, the fluidity is good, and the fouling is not easy to deposit, a low flow channel of about 30 mil can be used, with a pressure of 1-40 bar, to ensure that the raw milk can be preconcentrated quickly under a certain pressure to reach the preconcentration target. For the middle 2 to 4 stages, when concentrated milk reaches a certain concentration, because of the increase of viscosity, the decrease of fluidity, the increase of osmotic pressure and the increase of particle size, it is easy to deposit on the membrane, and a further concentration becomes difficult. Therefore, a medium flow channel of about 45 mil is used, with the pressure increased to 40 to 50 bar, and the flow channel aperture and pressure are increased to ensure the concentration efficiency. For the final 2 to 4 high-pressure stages, the concentrated milk has reached the target concentration. The concentration, viscosity, and particle size of the concentrated milk have reached the maximum value, the fluidity is the lowest, the osmotic pressure is the largest, and the fouling is most likely to deposit on the membrane. Therefore, a high flow channel of 65 to 80mil is used, and the pressure rises to 50 to 200 bar so as to ensure that the concentrated milk can flow effectively in the membrane to ensure the production time.

Preferably, the concentration device further comprises: a pretreatment unit, which is arranged downstream of the temporary storage unit and upstream of the homogenization unit to perform pretreatment of feed liquids from the temporary storage unit. The pretreatment may comprise a sterilization treatment to remove bacteria and unfavorable microorganisms in feed liquids. In the case of sterilization treatment, the pretreatment unit may be a low-temperature sterilization separator. Preferably, the low-temperature sterilization separator can comprise two stages, wherein the filtration pore diameter of the first stage is 0.990mm to 1.165mm, the pore diameter of the second stage is 0.495mm to 0.589mm, and the sterilization temperature is controlled at 45 to 50 °C.

Through the use of two-stage sterilization separation, and the use of different pore diameters of filters in two-stage sterilization separation, the feed liquid can first pass through a filter with a large pore diameter to filter out larger substances, and then pass through a filter with a small pore diameter, so as to prevent the filter pore from being blocked rapidly when only one-stage filtration is available. At the same time, by controlling the sterilization temperature at 45-50 °C, i.e. using such a low temperature while ensuring the sterilization effect, the growth of microorganisms can be controlled and more nutrients in the feed liquid can be kept as active as possible.

Preferably, the concentration device further comprises: a cooling unit, which cools the feed liquid concentrated by the concentration unit. The cooling unit comprises a first cooling unit and a second cooling unit. The first cooling unit cools the feed liquid to a first cooling temperature, and the second cooling unit further cools the feed liquid cooled by the first cooling unit to a second cooling temperature lower than the first cooling temperature.

The first cooling unit may comprise, for example, a jacketed tank which comprises a cooling liquid chamber to contain a cooling liquid, and the second cooling unit comprises, for example, a plate heat exchanger.

Through the first cooling unit, the feed liquid will be reduced from about 15 °C to 4-7 °C to be stored in a buffer tank. It is guaranteed that the concentrated feed liquid can be stored in the buffer tank in the best state while controlling microbial proliferation in the product. The second cooling unit aims to quickly reduce the temperature of the feed liquid product to -2 to -3 °C before filling. Its purpose is to reduce the temperature of the feed liquid product, such as concentrated milk, when it is put into storage. This can benefit quickly freezing the product to a target temperature to freeze the product, thereby preventing problems such as fat floating, and lactose and protein crystallization that affect the subsequent quality of concentrated milk.

Preferably, the concentration device further comprises a filling unit, which fills the feed liquid cooled by the cooling unit into a predetermined package.

Preferably, the concentration device further comprises a cleaning unit, which cleans the feed liquid concentration device after the feed liquid concentration is completed.

By setting a cleaning unit, after the feed liquid is concentrated, the fouling remaining on the surface of the reverse osmosis membrane can be removed, thereby restoring the flux of the reverse osmosis membrane, so that the device can continue to produce.

With the concentration device disclosed herein, for a feed liquid that needs to be concentrated, especially for cow milk products, part of water in cow milk can be removed, the volume of raw cow milk can be reduced, the preservation property can be increased, the preservation cost can be saved, and the transportation can be made more conveniently. In addition, by concentrating and freezing raw cow milk, the problem of the imbalance of raw cow milk in seasons and in production areas can be balanced.

### BRIEF DESCRIPTION OF THE DRAWINGS

The above and other objects and features will become clear from the following description with reference to the accompanying drawings, in which the same reference numerals have been used to refer to the same parts throughout several drawings unless otherwise specified, and in the drawings:
Figure 1 is a schematic diagram showing a concentration device according to the present disclosure;

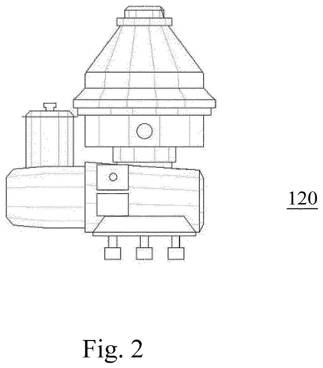

Figure 2 is a schematic diagram of an exemplary pretreatment unit that can be used in the device shown in Figure 1;

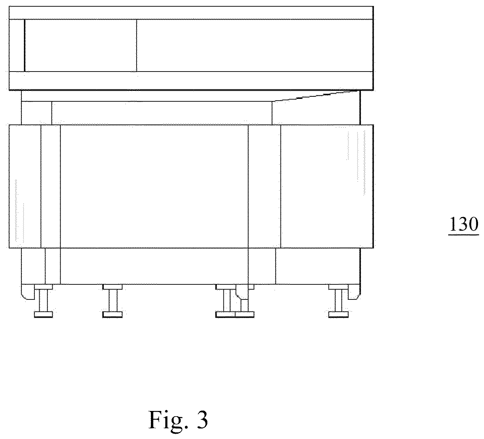

Figure 3 is a schematic diagram showing an exemplary homogenization unit that can be used in the concentration device of Figure 1;

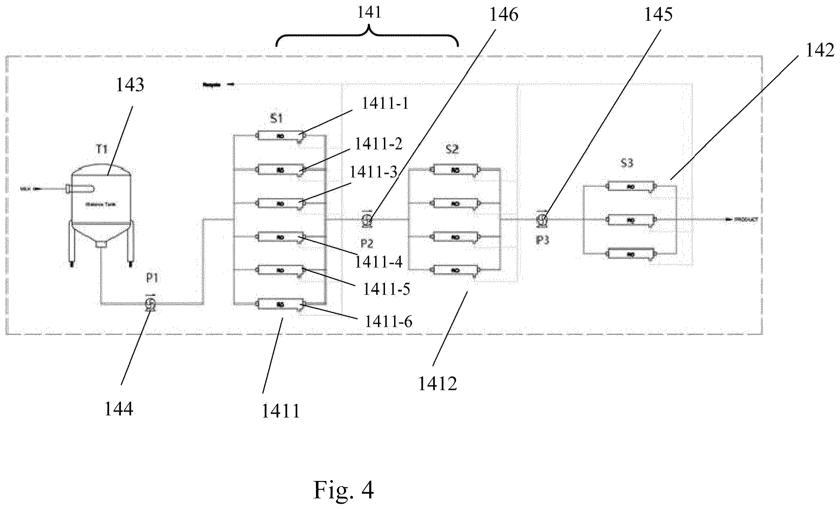

Figure 4 is a schematic diagram showing an exemplary concentration unit that can be used in the concentration device of Figure 1;

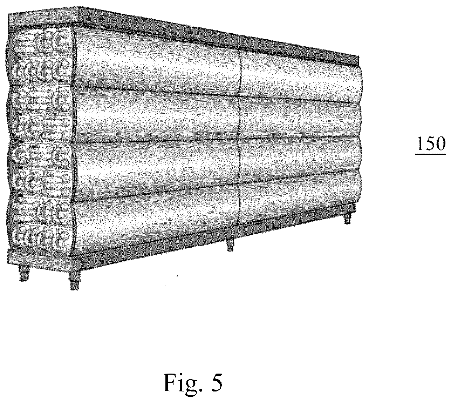

Figure 5 is a schematic diagram showing an exemplary secondary cooling unit that can be used in the concentration device of Figure 1; and
Figure 6 is a flowchart showing an exemplary operation method of a concentration device according to the present disclosure.

### DETAILED DESCRIPTION OF THE EMBODIMENTS

The following is a detailed description of the concentration device and the corresponding concentration method according to the present disclosure with reference to the accompanying drawings. Although the present invention is disclosed in conjunction with the above several preferred embodiments, they are not intended to limit the present invention. Any person with ordinary knowledge in the technical field to which the present disclosure pertains can make any changes and modifications without departing from the spirit and scope of the present invention. Therefore, the protection scope of the present invention shall be defined by the appended claims.

In the following description, terms such as "upstream" and "downstream" are used to indicate directionality, where upstream refers to the direction from which a feed liquid comes from, and downstream refers to the direction in which a feed liquid will flow. Therefore, when it is described that one unit is upstream of another unit, a feed liquid will flow from said one unit to another unit, and vice versa.

### I. Overview

Hereinafter, the concentration device 100 according to the present disclosure is described with reference to the drawings.

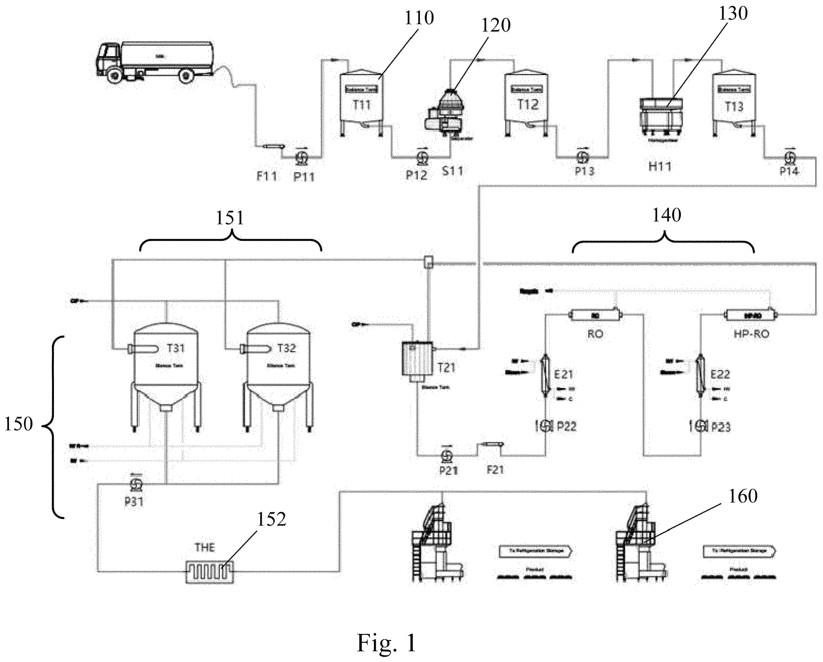

As shown in Figure 1, the concentration device 100 comprises a temporary storage tank 110, a pretreatment unit 120, a homogenization unit 130, a concentration unit 140, a cooling unit 150, and a filling unit 160. In addition, the concentration device 100 also comprises a cleaning unit (a CIP unit) (not shown) to clean the entire device after the concentration is complete. In addition, optionally, a buffer tank and a feed pump (not labeled) are comprised between each unit.

For example, after the feed liquid of raw cow milk is collected, physical and chemical indicators are tested first, and the raw cow milk that meets requirements is temporarily stored in a temporary storage unit (a temporary storage tank) 110. The raw cow milk temporarily stored in the temporary storage tank 110 is then pretreated. The pretreatment may be performed in a pretreatment unit 120, and may comprise a sterilization filtration treatment. The pretreatment unit 120 may comprise, for example, a sterilization separator, which may comprise two stages to remove bacteria and spores from raw cow milk.

After the pretreatment, the raw cow milk will be sent into a homogenizer for homogenization. Optionally, before entering the homogenizer, a buffer tank T12 may be arranged, and the feed liquid in the buffer tank T12 is fed into a homogenizer through a feed pump P13. According to the present disclosure, two-stage homogenization is used. The pressure of the first stage homogenization is, for example, 120 bar, the pressure of the second stage homogenization is, for example, 50 bar, and the temperature of the homogenizer is set to 13 °C. As a result, the fat in raw cow milk is broken more finely and the product system is more stable. After the homogenization treatment, the raw cow milk can be put into a temporary storage tank, such as a temporary storage tank T13, for temporary storage, but this is not necessary.

After the homogenization treatment, the raw cow milk is sent to a concentration unit 140, for example, through a feed pump p14. The concentration unit 140 performs a concentration treatment using a reverse osmosis membrane. Preferably, the concentration unit 140 comprises at least a low-pressure reverse osmosis membrane treatment unit and high-pressure reverse osmosis membrane treatment unit to concentrate raw cow milk. After the concentration treatment, raw cow milk can be sent to a temporary storage tank for temporary storage, but this is not necessary. In addition, the concentration unit 140 may comprise a feed buffer tank T21, a circulating feed pump P21, and so on.

The concentrated raw cow milk is then cooled to -2.5 °C in a cooling unit 150, and then filled in a filling unit 160. The filling unit 160 comprises, for example, a large bag filling machine to fill the concentrated raw cow milk into a sterile octagonal bag. The filling temperature is maintained at minus 2 °C throughout the process.

The filled concentrated milk is packed into a cardboard box and palletized in a quick-cooling warehouse. The temperature in the quick-cooling warehouse is, for example, minus 22 °C, and the oncoming wind speed is 7 m/s. After 18 hours of freezing, the core temperature of the concentrate package reaches minus 8 °C, and then the concentrated milk is transferred to a freezing warehouse with a temperature of minus 18 °C for storage, thereby obtaining frozen concentrated milk.

After the production by the above process, a stable light-yellow block frozen concentrated milk is obtained. By detecting before being cooled, the concentrated milk has a total solid content of 40.5%, a protein content of 10.22%, a fat content of 12.0%, and a lactoferrin retention amount of 90%. After 12 months of freezing and then restoration, the indicator is stable, and there is neither fat floating nor gravel formation after boiling.

The obtained frozen concentrated milk can be stored in a freezing warehouse for more than 12 months, and can be restored to cow milk through an appropriate restoration process. The nutritional ingredient of the restored cow milk is basically the same as that of the collected raw cow milk, thereby meeting the need of long-term storage.

After the production of a specific batch of concentrated milk, the entire concentration device 100 will be cleaned by a cleaning unit 170, which performs, for example, standard CIP cleaning, thereby cleaning residues throughout the device and returning the membrane flux of the reverse osmosis membrane of the concentration unit to the previous level.

### II. Pretreatment unit 120

The pretreatment unit 120 comprises a low-temperature sterilization separator. For example, an ecoclear low-temperature sterilization machine from GEA can be used. Of course, the present disclosure is not limited to this. Preferably, in the present disclosure, a two-stage low-temperature sterilizer is used. The first-stage filtration pore diameter is 0.991mm to 1.165mm, while the second-stage filtration pore diameter is 0.495mm to 0.589mm. The temperature of the low-temperature sterilizer is controlled at 45 to 50 °C.

The low-temperature sterilization separator comprises, for example, a casing; a rotating drum accommodated in the casing, wherein the rotating drum comprises a plurality of discs stacked together, and a small gap is kept between the discs; a motor that drives the rotating drum to rotate; a transmission shaft that transmits the rotation of the motor to the rotating drum; a deslagging equipment and a control cabinet, etc.

A suspension (or an emulsion) is added to the rotating drum by a feeding tube located in the center of the rotating drum. The rotating drum is driven by a motor to rotate. When the suspension (or emulsion) flows through the gap between the discs, solid particles (or liquid droplets) are settled on the discs under the action of a centrifuge to form a sediment (or liquid layer). The sediment slides along the surface of the discs to leave the discs and accumulates at a part of the largest diameter in the rotating drum. The separated liquid is discharged from the rotating drum through a liquid outlet, and the sediment is discharged by the deslagging equipment.

The role of the disc is to shorten the sedimentation distance of solid particles (or liquid droplets) and expand the sedimentation area of the rotating drum. Because the disc is installed in the rotating drum, the production capacity of the separator is greatly improved. The solids accumulated in the rotating drum can be removed manually by dismantling the rotating drum after the separator is shut down, or discharged from the rotating drum through a deslagging mechanism without shutting down the separator.

A dish-type separator can perform two operations: liquid-solid separation (i.e., separation of low concentration suspension), called clarification operation; liquid-liquid separation (or liquid-liquid-solid) separation (i.e., separation of emulsion). For raw cow milk, through separation operation, most of bacteria and microbial spores in cow milk can be removed, the guarantee period of the product can be extended, the product can get better flavor, the total number of product colonies can be controlled, the quality target can be achieved, and product specifications and legal requirements can be met.

### III. Homogenization unit 130

The homogenization unit 130 homogenizes the pretreated raw cow milk. Preferably, the homogenization unit 130 comprises a two-stage homogenization unit, wherein the first-stage homogenization unit works at a pressure of 120 bar, and the second-stage homogenization unit works at a pressure of 50 bar. The working temperature of the homogenization unit is maintained at 10 to 13 °C to inhibit the proliferation of microorganisms and protect the activity of active substances in cow milk, while ensuring that the entire concentration process is performed below 50 °C.

There are no particular restrictions on the homogenizer constituting the homogenization unit. For example, various types of homogenizers, such as a collision type or an opposite jet type, can be used. As an example, a homogenizer produced by APV in Denmark is used.

The homogenizer has a two-stage homogenization mechanism. Each stage of the homogenization mechanism comprises a rotor and a stator, and there is a gap between the rotor and the stator. Raw milk is supplied to the gap between the rotor and the stator. The high-speed and stable rotation of the rotor results in a comprehensive kinetic energy efficiency such as high frequency, strong circumferential tangential speed, and angular velocity. Under the action of the rotor and the stator, in the reasonably narrow gap between the stator and the rotor, comprehensive effects such as a strong, reciprocating hydraulic shear, friction, centrifugal extrusion, and liquid flow collision are formed on the raw milk, so that the above working process of the feed liquid (raw milk) is repeated in the container, and the product is finally obtained.

### IV. Concentration unit 140

The concentration process uses RO reverse osmosis technology. Reverse osmosis technology applies an external pressure higher than the osmotic pressure of a solution on the solution side of a semi-permeable membrane. When a solution passes through a semipermeable membrane, only a certain size of substances is allowed to pass through, usually only water molecules or substances smaller than water molecules are allowed to pass through, so as to achieve the concentration of cow milk. The concentration unit 140 comprises a liquid storage tank 143, a low-pressure concentration unit 141, and a high-pressure concentration unit 142. Booster pumps 144 and 145 may also be provided between the liquid storage tank 143 and the low-pressure concentration unit 141 and between the low-pressure concentration unit 141 and the high-pressure concentration unit 142.

In addition, before the low-pressure concentration unit, a filter can also be provided, for example, a filter F21 as shown in Figure 1.

The low-pressure concentration unit 141 can also be called a low-pressure reverse osmosis membrane treatment unit, which can comprise a plurality of stages. As shown in the Figure, the low-pressure reverse osmosis membrane treatment unit comprises two stages, which are the first-stage low-pressure reverse osmosis membrane treatment unit 1411 and the second-stage low-pressure reverse osmosis membrane treatment unit 1412, respectively. The first-stage low-pressure reverse osmosis membrane treatment unit 1411 can receive raw cow milk from the homogenization unit 130, and preferably, a liquid storage tank 143 is provided between the two to temporarily store the homogenized raw cow milk. A booster pump 144 is provided between the liquid storage tank 143 and the first-stage low-pressure reverse osmosis membrane treatment unit 1411 of the low-pressure concentration unit 141. The booster pump 144 can pressurize raw cow milk in the liquid storage tank 143 to a pressure of, for example, 1 to 40 bar and control the surface flow rate to 4 to 7 m/s. In addition, booster pumps 146 and 145 are provided between the first-stage low-pressure reverse osmosis membrane treatment unit 1411 and the second-stage low-pressure reverse osmosis membrane treatment unit 1412 and between the second-stage low-pressure reverse osmosis membrane treatment unit 1412 and the high-pressure reverse osmosis membrane treatment unit 142, so that the pressure of raw cow milk in the first-stage low-pressure reverse osmosis membrane treatment unit 1411, the pressure of raw cow milk in the second-stage low-pressure reverse osmosis membrane treatment unit 1412, and the pressure of raw cow milk in the high-pressure reverse osmosis membrane treatment unit 1413 are gradually increased.

As shown in the Figure, each stage of the low-pressure reverse osmosis membrane treatment units 1411 and 1412 may comprise a plurality of membrane assemblies. Taking the first-stage low-pressure reverse osmosis membrane treatment unit 1411 as an example, it comprises six membrane assemblies 1411-1 to 1411-6, which are connected with each other in parallel. However, the present disclosure is not limited to this, but may comprise more or less membrane assemblies. Various membrane assemblies may be connected in series, in parallel, or in a combination of series and parallel.

In order to control the pressure in each stage of the low-pressure reverse osmosis membrane treatment unit, a pressure sensor (not shown) can be provided at the inlet or outlet of each stage. The signal of the pressure sensor can be provided to a control system as a feedback signal for the control system to control a booster pump to change the pressure of raw cow milk supplied into the treatment unit.

In addition, a heat exchanger can be provided at the inlet or the outlet of each stage of the low-pressure reverse osmosis membrane treatment unit, for example, E21 and E22, as shown in Figure 1, to control the temperature of raw cow milk entering the low-pressure reverse osmosis membrane treatment unit below 10 °C.

Although the Figure only shows that the high-pressure concentration unit 142 or the high-pressure reverse osmosis membrane treatment unit 142 comprises one stage, it can use a structure similar to the low-pressure concentration unit 141, comprising a plurality of stages, such as 2 to 4 stages (one stage is shown in the Figure). Moreover, each stage of the high-pressure reverse osmosis membrane treatment unit 142 may similarly comprise a plurality of membrane assemblies (three membrane assemblies are shown in the Figure), which are connected in series, in parallel, or in a combination of series and parallel.

A booster pump may be provided between various stages of the high-pressure concentration unit 142, and between the low-pressure concentration unit 141 and the high-pressure concentration unit. Moreover, a pressure sensor may similarly be provided at each stage to control the pressure of each stage. Preferably, the pressure of the high-pressure concentration unit is set in the range of 40 to 200 bar, and is increased stagewise.

Similarly, in order to ensure that the concentration process is performed at a low temperature, a heat exchanger is provided at the inlet or the outlet of each stage or a predetermined stage of the high-pressure concentration unit 142 to ensure that the concentration temperature is controlled below 15 °C. As for the number of heat exchangers, one stage may be provided with one heat exchanger, or multiple stages may be provided with one heat exchanger. The present disclosure has no limitation on this, as long as the temperature of the concentrated raw cow milk can be maintained below 15 °C.

According to the present disclosure, the reason for using a multi-stage concentration system is that the multi-stage concentration process of milk can significantly reduce the time for pre-concentration, and can benefit the continuous production of the device. In single-stage concentration, the concentrated milk with increasing concentration repeatedly passes through the same membrane core of a fixed format. As the concentration of concentrated milk becomes higher, the membrane flux decreases, and the surface flow rate becomes slower, which easily leads to blockage of the membrane surface, increases the energy consumption of the device, and reduces the continuous operation time of the device.

The advantages of the multi-stage concentration according to the present disclosure are that the concentrated milk is sequentially flushed, smoothed, and cleaned. The membrane flux performance is in the optimal state that can be achieved by the membrane. The loss of flow velocity on the membrane surface is less, the fouling remaining on the membrane surface is less, the auxiliary power required during operation is relatively low, the time required for cleaning is less, and the temperature and amount of a cleaning agent are relatively low. As a result, more energy saving and environmental protection are achieved.

This system uses the structure of a segmented concentration unit of a low-pressure and high-pressure concentration unit so as to improve the quality of concentrated milk. In the system, the first-segment low-pressure reverse osmosis membrane treatment unit has a pressure of 1 to 40 bar, and a surface flow rate of 4 to 7 m/s. The temperature is controlled below 10 °C.

In the second segment of the high-pressure reverse osmosis unit, the present disclosure uses HP 8038 RO reverse osmosis membrane of KOCH Inc., but the present invention is not limited to this. Various types of materials such as acetate cellulose membrane, aromatic polyhydrazine membrane, aromatic polyamide membrane, and polyamide membrane may be used. There are no particular restrictions on the type of membrane, and various forms such as hollow type, roll type, and plate type can be used. In the present disclosure, roll type polyamide reverse osmosis membrane resistant to high-pressure is preferred, with a pressure level of 40 to 200 bar, a surface flow rate of 6 to 9m/s, and a temperature below 20 °C.

Through the design of multi-stage concentration, the whole concentration unit is consisted of multi-stage concentration modules, in which different modules are designed with different flow channels in size according to the concentration, different viscosity and particle size of concentrated milk to ensure the efficiency of concentration. In the low-pressure concentration units, because the concentration of concentrated milk is low, the fluidity is good, and the fouling is not easy to deposit, a low flow channel of about 30 mil is used, with a pressure of 1-40 bar, to ensure that the raw milk can be preconcentrated quickly under a certain pressure to reach the preconcentration target. In the 2 to 4 stages of the end of the low-pressure concentration unit and the front end of the high-pressure concentration unit, when concentrated milk reaches a certain concentration, because of the increase of viscosity, the decrease of fluidity, the increase of osmotic pressure and the increase of particle size, it is easy to deposit on the membrane, and further concentration becomes difficult. Therefore, a medium flow channel of about 45 mil is used, with the pressure increased to 40 to 50 bar, and the flow channel aperture and pressure increased to ensure the concentration efficiency. In the final 2 to 4 high-pressure stages, the concentrated milk has reached the target concentration. The concentration, viscosity, and particle size of the concentrated milk have reached the maximum value, the fluidity is the lowest, the osmotic pressure is the largest, and the fouling is most likely to deposit on the membrane. Therefore, a high flow channel of 65 to 80mil is used, and the pressure rises to 50 to 200 bar so as to ensure that the concentrated milk can flow effectively in the membrane to ensure the production time.

Through the control of the pressure sensor with feedback, the pressure can be accurately controlled. The pressure control has a crucial impact on the efficiency and quality of concentrated dairy production. The pressure control comprises the time of pressure increase and the magnitude of the pressure value. The pressure control can greatly reduce the pre-concentration time, and shorten the pre-concentration time to 1 h. If the pressure is increased too fast in the early stage during production, the membrane flux will decrease rapidly, which will affect the subsequent pre-concentration time and subsequent production time. The too slow increase of pressure will increase the pre-concentration time to reach the target concentration and reduce production efficiency. Through experiments in the present invention, it is preferred to gradually increase the pressure to 40 to 42 bars within 40 to 45 min after the start of production, and after the pre-concentration is completed, the pressure is increased to 60 to 80 bars until the end of production.

### V. Cooling unit 150

The temperature control of concentrated milk plays an important role in controlling the quality and microbial indicators of concentrated products. The high cooling efficiency can increase the freezing effect of the concentrated milk in the later stage. The concentrated milk quickly freezes, prevents the fat from floating, prevents the lactose from crystallizing into grit, prevents the reproduction of microorganisms, and ensures the quality of restoration.

The present disclosure uses a two-stage cooling technology, wherein a cooling unit 150 comprises a first cooling unit 151 and a second cooling unit 152. A buffer tank is preferably provided downstream of the second cooling unit 152 to temporarily store raw cow milk after two stages of cooling.

The first cooling unit 151 preferably comprises a jacketed storage tank. An ice water as a refrigerant is pumped through the jacket of the storage tank at 2-3 °C, so that concentrated milk in the storage tank is reduced from about 12-14 °C to 4-7 °C. The concentrated milk cooled by the first cooling unit 151 can be sent to a buffer tank for temporary storage.

The second cooling unit 152 preferably comprises a low temperature critical tube-type heat exchanger, as shown in the figure, which comprises a main body 1521, a refrigerant chamber 1522, and a pipe 1523 passing through the refrigerant chamber. The concentrated milk from the first cooling unit 151 is pumped into the pipe 1523, and while passing through the pipe 1523, it exchanges heat with the refrigerant in the refrigerant chamber 1522, and is rapidly cooled to -2 to 3 °C. The refrigerant is preferably a 50% ethylene glycol aqueous solution.

The concentrated milk that has passed through the two stages of cooling can then be fed into a filling machine. Preferably, the pipe between the exit of the second cooling unit 1522 and the filling machine is an insulated pipe, or preferably, the pipe is a jacketed pipe with ice water at 1 °C as a refrigerant in the jacket to prevent the concentrated milk from being heated by external temperature during the flow of the concentrated milk through the pipe.

The reason for using two-stage cooling is that after the concentrated milk is discharged, the first stage of cooling reduces the concentrated milk at about 15 °C to 4-7 °C for storage in a buffer tank. This ensures that the concentrated milk can be stored in the buffer tank in the best state while controlling the proliferation of microorganisms in the product. The buffer tank also controls the proliferation of microorganisms in the product. The purpose of the second stage of cooling is to quickly reduce the temperature of the product to -2 to -3 °C before filling. Its purpose is to reduce the temperature of the concentrated milk when it is put into storage. This can benefit quickly freezing the product to a target temperature, thereby preventing problems such as fat floating, and lactose and protein crystallization, that affect the subsequent quality of concentrated milk.

### VI. Cleaning unit (not shown in the figure)

After the production of concentrated milk, some fouling will remain on the surface of the reverse osmosis membrane, which will reduce the membrane flux and affect the continued production. According to the present invention, a cleaning unit is provided, which includes a high-pressure pump to supply different cleaning liquids to each unit under control under pressure, so that the entire device can be cleaned and the membrane flux after cleaning can be restored to the value before production. This has an important effect on increasing production efficiency and reducing costs and energy consumption.

For example, the cleaning process proceeds as follows:
(1) The first step, flushing with hot water at 50 to 55 °C for 900 s at a flushing flow of 5000 1/h. The purpose is to flush out the remaining concentrated milk in the system after production.
(2) The second step, cleaning cyclically with alkali + surfactant, wherein the concentration of alkali is 0.4-0.6 w/w%, the pH value is 10.9-11.1, and the surfactant concentration is 0.2-0.3 w/w%. After adding the cleaning agent, the system is preheated to 50-55 °C, the cleaning flow is 5000 1/h, and the cycle time is 1800 s.
(3) The third step, flushing with water for 900 s, wherein the flushing flow is 5000 1/h. The purpose is to flush out the cleaning agent in the system.
(4) The fourth step, cleaning cyclically with alkali and enzyme, wherein the alkali concentration is 0.6 to 0.8 w/w%, and the pH value is 10 to 10.8. The enzyme concentration is 0.2-0.3 w/w%, the system is preheated to 47-50 °C after adding the cleaning agent, the cleaning flow is 5000 1/h, and the cycle time is 2700 s.
(5) The fifth step, flushing with water for 900 s, wherein the flushing flow is 5000 1/h. The purpose is to flush out the cleaning agent in the system.
(6) The sixth step, cleaning cyclically with an acid, wherein the acid concentration is 0.3 to 0.4 w/w%, the pH value is 1.8-2.0, after adding the cleaning agent, the system is preheated to 47-50 °C, the cleaning flow is 5000 1/h, and the cycle time is 1800 s.
(7) The seventh step, flushing with water for 900 s, wherein the flushing flow is 5000 1/h. The purpose is to flush out the cleaning agent in the system.
(8) The eighth step, cleaning cyclically with alkali + surfactant, wherein the alkali concentration is 0.4-0.6 w/w%, and the pH value is 10.9-11.1. The surfactant concentration is 0.2-0.3 w/w%, after adding the cleaning agent, the system is preheated to 50 to 55 °C, the cleaning flow is 5000 1/h, and the cycle time is 1800 s.
(9) The ninth step, flushing with water for 1800 s, wherein the flushing flow is 5000 1/h. The purpose is to flush out the cleaning agent in the system.
(10) The tenth step, testing of flux by circulating in water system at the normal temperature, observing the flow of RO permeate, and judging according to the comparison with the initial flow.

### VII. Operation process

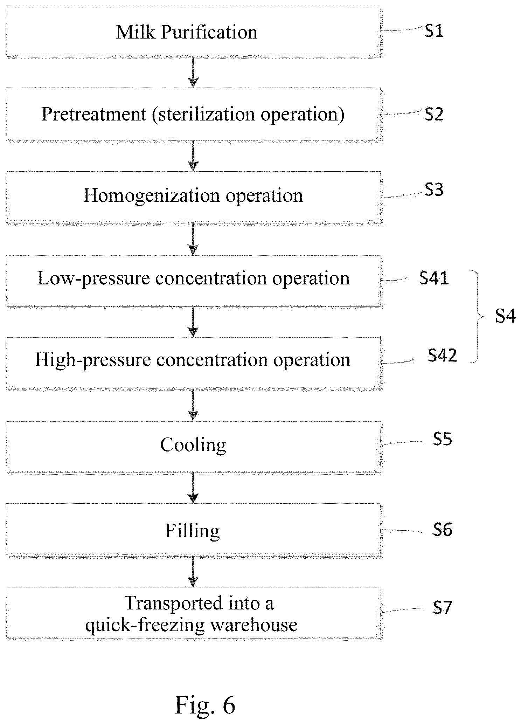

The operation process of the concentration device according to an exemplary embodiment disclosed herein is described below with reference to Figure 6. As shown in Figure 6, in step S1, after raw milk arrives at a factory, physical and chemical indicators are tested, TS 12-13%, fat 2.8-3.0%, and protein 2.8-3.3%. The raw milk that meets the requirements is filtered to remove physical impurities, wherein the first-stage filter has a pore diameter of 1.00 mm and the second-stage filter has a pore diameter of 0.50 mm.

2) In step S2, after the raw milk is temporarily stored, a pretreatment operation or a sterilization and separation operation is performed. In this operation, spores in the raw milk are removed, and the spore separation rate is greater than 95%. The total solid content in the obtained raw milk is 12.35%. After the treatment, the raw milk is cooled to 7 °C and stored.

3) In step S3, the raw milk after the sterilization and separation operation enters the homogenization unit for cold homogenization. The temperature is set to 13 °C, and the two-stage pressure is 170 bar in total, wherein the first-stage homogenization pressure is 120 bar and the second-stage homogenization pressure is 50 bar.

4) In step S4, the raw cow milk homogenized by the homogenization unit enters a concentration unit, which comprises a low-pressure concentration unit and a high-pressure concentration unit. Correspondingly, the step S4 may comprise a low-pressure concentration operation S41 and a high-pressure concentration operation S42. As an example, the low-pressure reverse osmosis membrane treatment unit has 7 stages, in which the first 3 stages use a low flow channel of 30mil and a pressure of 40 bar, and the last 4 stages use a medium flow channel of 45mil and a pressure of 50 bar. The surface flow rate of the membrane is 5 m/s. When the raw cow milk is concentrated to about 25% of the total solid content, it is pumped into a high-pressure reverse osmosis membrane treatment unit, which uses a high flow channel of 65mil, a pressure of 80bar, and a membrane surface flow rate of 7m/s. The temperature in the reverse osmosis membrane is maintained below 15 °C. The total solid content of the concentrated milk obtained by the high-pressure reverse osmosis membrane treatment is 40 to 45%.

5) In step S5, the concentrated milk is pumped into a first cooling unit of a cooling unit. The temperature in the tank of the first cooling unit is controlled at 4 °C, and an ice water at 1 °C is used as a refrigerant. The concentrated milk that has been preliminarily cooled enters a second cooling unit over a booster pump, that is, a low-temperature critical tube-type heat exchanger. A 50% ethylene glycol aqueous solution at -5 °C is used as a refrigerant. When the concentrated milk passes through the heat exchanger tube, the concentrated milk and the refrigerant exchange heat, so that the outlet temperature of the second cooling unit is -2.5 °C. Then, the concentrated milk is sent to a filling machine for filling via a jacketed cooling pipe.

6) In step S6, the concentrated milk is filled into a customized sterile octagonal bag through a large bag filling machine, and the filling temperature is maintained at -2 °C.

7) In step S7, the concentrated milk is packed into a cardboard box matched with the octagonal bag, and palletized into a quick-freezing warehouse. The temperature of the freezing warehouse is -22 °C and the oncoming wind speed is 7 m/s. After 18 hours of freezing, the core temperature reaches -8 °C, and then it is transferred to a freezing warehouse with a temperature of -18 °C for storage, thereby obtaining frozen concentrated milk.

8) Optionally, after the production of the concentration device is completed or after a predetermined production batch, a cleaning unit is used to perform a standard CIP process to clean the concentration device. This cleaning step has been described in detail above, so it will not be repeated here.

### Beneficial effect

In order to solve the concentration problem in the food industry (especially dairy products), the following methods are usually used: 1) a concentration method with evaporation: by using the heating function of a device, a standardized raw cow milk is added into an evaporation kettle and the evaporation kettle is heated. The raw cow milk is vaporized at its boiling point by use of a high temperature, and the secondary steam generated during the vaporization is continuously discharged, so as to remove water in the cow milk, so that the concentration of the milk is continuously increased until it reaches an expected concentration. However, because this method uses high temperature and high-pressure to remove water from feed liquids, there are the following disadvantages: (1) the cost of energy consumption is high, the process needs heating to produce a lot of steam, and the energy consumption is large; (2) in the process of concentration, the traditional evaporation method needs to heat cow milk, in which a low intensity of heating will lead to low evaporation efficiency, and an excessive intensity of heating will lead to the destruction of some active substances and some nutrients that may be contained in the feed liquids; and (3) only 10% of water can be removed by the evaporation method, which often fails to meet the requirements of enterprises for higher concentration degree, so the efficiency of this kind of concentration method is relatively low. Especially for dairy products, evaporation concentration is realized at high temperature, which has high energy consumption and increases the cost of dairy products. At the same time, the temperature required for evaporation concentration is high, and there are not only physical changes but also chemical changes in the process. This results in the loss of heat sensitive nutrients and flavor substances in milk, and the color of milk will also change.

The second method is 2) a conventional reverse osmosis method: a reverse osmosis device is composed of feed liquid distribution network, pure water distribution network, reverse osmosis membrane, pump, etc., so that treated feed liquids pass through a predetermined flow channel, water molecules in the feed liquids are collected to a central water collection pipe through a reverse osmosis membrane, and finally concentrated feed liquids are obtained. However, this concentration device has the following disadvantages: (1) the energy consumption is high, that is to say, with the concentration going on, the total solid content in feed liquids gradually increases, and the power of the operating pump that needs to be provided for the system standby increases in order to overcome the higher osmotic pressure, so the energy consumption increases; (2) due to the limitation of conventional reverse osmosis technology, membrane core and the maximum pressure of device, the concentration multiple that can be realized by the concentration technology is low, about 2 times, which cannot meet higher concentration requirements. The limitation of this method is that the concentration multiple is limited. At present, conventional reverse osmosis technology can only concentrate cow milk to 32%.

The third method is 3) forward osmosis method: a current emerging technology, which has not been applied to dairy production; a feed liquid and a draw liquid are flowed on both sides of a forward osmosis membrane; Using the osmotic pressure produced by different salt concentration on both sides of the membrane, water passes through the forward osmosis membrane from the side of the feed liquid with small salt concentration to the side of the draw solution with large salt concentration, so as to remove the water in the feed liquid and concentrate the feed liquid; the limitation of this method is that there is no example of industrial application at present, and the size of the membrane is limited by the manufacturing capacity so that a large area of membrane cannot be produced, which makes the capacity of treating cow milk low; the running cost is high, the forward osmosis membrane is easy to be blocked, and the cost of membrane replacement is very high.

The reverse osmosis concentration method of the present application comprises two types of reverse osmosis membrane concentration treatments, namely, a low-pressure reverse osmosis membrane concentration treatment and a high-pressure reverse osmosis membrane concentration treatment. In the method, the low-pressure reverse osmosis membrane concentration treatment uses a first predetermined pressure to perform reverse osmosis concentration treatment on feed, and the high-pressure reverse osmosis membrane concentration treatment uses a second predetermined pressure to perform reverse osmosis concentration treatment on feed, wherein the first predetermined pressure is less than the second predetermined pressure. The present application uses the above reverse osmosis concentration method, which overcomes the above problems in the concentration of food industry (especially dairy products), realizes the high concentration of dairy products, reduces energy consumption and operation cost, avoids the influence of heat treatment on various physical and chemical, microbiological and biochemical indicators of dairy products, and avoids the over proliferation of microorganisms and bacteria in the concentration of dairy products.

Under normal conditions, conventional RO can only concentrate raw milk to TS of about 20%. Due to the influence of concentration, osmotic pressure, and viscosity of concentrated milk, type of membrane and other factors, the concentration multiple cannot be increased, and concentrated milk with higher concentration cannot be obtained. There is no ready-made high-pressure RO device for the food industry (especially dairy products) on the market. Conventional high-pressure RO device often cannot meet the requirements of dairy production (comprising design requirements, cleaning requirements, high-pressure resistance requirements, etc.). Moreover, direct use of conventional high-pressure RO device will narrow the flow channel of the membrane, making the membrane easier to be polluted and blocked. The present application avoids the above problems by using the method of low-pressure reverse osmosis concentration and then high-pressure reverse osmosis concentration, and special design of high-pressure RO device.

Moreover, the present application preferably uses multi-stage concentration, comprising multi-stage high-pressure RO concentration and multi-stage low-pressure RO concentration. For the concentration of dairy products, single-stage concentration only circulates on a set of membranes, and the parameters of single-stage membranes cannot be adjusted. As the concentration progresses, fat and other materials will be deposited on the membrane surface, and the deposition rate will become faster and faster; the use of multi-stage concentration can greatly reduce the time of pre-concentration, which can benefit the continuous production of the device. In addition, in case of single-stage concentration, the concentrated milk passes through the same membrane core repeatedly. As the concentration of concentrated milk becomes higher, the membrane flux decreases, and the surface flow rate becomes slower, which can easily lead to the blockage of the membrane surface and increase the energy consumption of the device. The advantages of multi-stage concentration also include that concentrated milk passes through clean membrane surface with the best membrane flux performance in sequence, has less loss of surface flow rate, and has less residual fouling on the membrane surface, thereby achieving more energy conservation and environmental protection.

In addition, the pretreatment temperature of the general RO process is 65 to 70 °C, which affects the quality of dairy products. In the cold concentration process of the present application, the temperature is controlled below 50 °C throughout the process, and the temperature of the membrane concentration stage is controlled below 15 °C. In the process of the present application, the temperature is kept as low as possible to control microbial reproduction and it ensure that active substances in cow milk are not destroyed as far as possible. The present application uses a combination of a plurality of low-temperature pretreatment processes and adjusts the parameters of each step, which beneficially controls the treatment temperature throughout the process.

### Examples

The acceptance inspection of raw milk uses national standards GB 19301-2010, NY/T 1172-2006.

### Example 1

1) After the raw milk arrived at a factory, physical and chemical indicators were tested, TS 12.33%, fat 3.2%, and protein 3.1%. The raw milk that meets the requirements was filtered to remove physical impurities, wherein the pore diameter of the first-stage filter was 1.00mm and the pore diameter of the second-stage filter was 0.50 mm.
2) After temporary storage, a sterilization and separation operation was performed on the raw milk, and then the raw milk was cooled to 7 °C and stored.
3) The raw milk entered a homogenizer for cold homogenization; the temperature was set to 13 °C, and the two-stage pressure was 170 bar in total, wherein the first-stage homogenization pressure was 120 bar and the second-stage homogenization pressure was 50 bar; and then the raw milk entered a sterilization separator to remove spores, and the spore separation rate was greater than 95%; and the total solid content in the obtained raw milk was 12.35%.
4) The raw milk entered a normal pressure reverse osmosis membrane treatment unit; the normal pressure reverse osmosis membrane module had 7 stages, wherein the first 3 stages used a low flow channel of 30mil and a pressure of 40bar, and the latter 4 stages used a middle flow channel of 45mil and a pressure of 50bar; the surface flow rate of the membrane was 5m/s; when the raw milk was concentrated to a total solid content of about 25%, it entered a high-pressure reverse osmosis membrane treatment unit which used a high flow channel of 65mil, a pressure of 80bar, and a membrane surface flow rate of 7m/s; the temperature in the reverse osmosis membrane had been maintained below 15 °C, through the high-pressure reverse osmosis part, the total solid content of the concentrated milk obtained was 40.2%; and then the concentrated milk entered a temporary storage tank of the concentrated milk.
5) The concentrated milk entered a storage tank and was continuously cooled, that is, the first-stage cooling; the temperature in the tank was controlled at 4 °C and an ice water at 1 °C was used as a refrigerant; and then the concentrated milk entered a low-temperature critical tube-type heat exchanger through a material pump, that is, the second-stage cooling; a 50% ethylene glycol aqueous solution at -5 °C was used as a refrigerant; the inlet temperature of the second-stage cooling was 4 °C, and the outlet temperature after cooling was -2.5 °C; and the concentrated milk passed through a cooled pipe with a jacket using ice water at 1 °C as a refrigerant and quickly reached a filling machine for filling.
6) The concentrated milk was filled into a customized sterile octagonal bag through a large bag filling machine, and the filling temperature was maintained at -2 °C.
7) The concentrated milk was packed into a cardboard box matched with the octagonal bag, and palletized into a quick-freezing warehouse; the temperature of the freezing warehouse was -22 °C and the oncoming wind speed was 7 m/s; after 18 hours of freezing, the core temperature reached -8 °C, and then it was transferred to a freezing warehouse with a temperature of -18 °C for storage, thereby obtaining frozen concentrated milk.
8) The cleaning process was the above-mentioned standard CIP cleaning.

Results: after the production by the above process, a stable light-yellow block frozen concentrated milk was obtained. By detecting before being cooled, the concentrated milk had a total solid content of 40.5%, a protein content of 10.22%, a fat content of 12.0%, a lactoferrin retention amount of 90%, a furosine content of 11.3mg/L, an IgG retention amount of 95%, and a GMP retention amount of 100%. After 12 months of freezing and then restoration, the indicators were stable, and there was neither fat floating nor gravel formation after boiling. After CIP, by detecting, the membrane flux returned to the value before use. The frozen freezing warehouse was frozen. After entering a quick-freezing warehouse and being frozen for 14 hours, the core temperature of the concentrated milk reached -8 °C.

### Example 2

1) After the raw milk arrived at a factory, physical and chemical indicators were tested, TS 13.1%, fat 2.9%, and protein 3.2%. The raw milk that meets the requirements was filtered to remove physical impurities, wherein the pore diameter of the first-stage filter was 1.00mm and the pore diameter of the second-stage filter was 0.50 mm.
2) After temporary storage, a sterilization and separation operation was performed on the raw milk, and then the raw milk was cooled to 7 °C and stored.
3) The raw milk entered a homogenizer for cold homogenization; the temperature was set to 13 °C, and the two-stage pressure was 170 bar in total, wherein the first-stage homogenization pressure was 120 bar and the second-stage homogenization pressure was 50 bar; and then the raw milk entered a sterilization separator to remove spores, and the spore separation rate was greater than 95%; and the total solid content in the obtained raw milk was 12.35%.
4) The raw milk entered a normal pressure reverse osmosis membrane treatment unit; the normal pressure reverse osmosis membrane module had 7 stages, wherein the first 3 stages used a low flow channel of 30mil and a pressure of 40bar, and the latter 4 stages used a middle flow channel of 45mil and a pressure of 50bar; the surface flow rate of the membrane was 5m/s; when the raw milk was concentrated to a total solid content of about 25%, it entered a high-pressure reverse osmosis membrane treatment unit which used a high flow channel of 65mil, a pressure of 80bar, and a membrane surface flow rate of 7m/s; the temperature in the reverse osmosis membrane had been maintained below 15 °C, through the high-pressure reverse osmosis part, the total solid content of the concentrated milk obtained was 42.5%; and then the concentrated milk entered a temporary storage tank of the concentrated milk.
5) The concentrated milk entered a storage tank and was continuously cooled, that is, the first-stage cooling; the temperature in the tank was controlled at 4 °C and an ice water at 1 °C was used as a refrigerant; and then the concentrated milk entered a low-temperature critical tube-type heat exchanger through a material pump, that is, the second-stage cooling; a 50% ethylene glycol aqueous solution at -5 °C was used as a refrigerant; the inlet temperature of the second-stage cooling was 4 °C, and the outlet temperature after cooling was -2.5 °C; and the concentrated milk passed through a cooled pipe with a jacket using ice water at 1 °C as a refrigerant and quickly reached a filling machine for filling.
6) The concentrated milk was filled into a customized sterile octagonal bag through a large bag filling machine, and the filling temperature was maintained at -2 °C.
7) The concentrated milk was packed into a cardboard box matched with the octagonal bag, and palletized into a quick-freezing warehouse; the temperature of the freezing warehouse was -22 °C and the oncoming wind speed was 7 m/s; after 18 hours of freezing, the core temperature reached -8 °C, and then it was transferred to a freezing warehouse with a temperature of -18 °C for storage, thereby obtaining frozen concentrated milk.
8) The cleaning process was the above-mentioned standard CIP cleaning.

Results: after the production by the above process, a stable light-yellow block frozen concentrated milk was obtained. By detecting before being cooled, the concentrated milk had a total solid content of 41.3%, a protein content of 10.31%, a fat content of 12.1%, a lactoferrin retention amount of 92%, a furosine content of 11.5mg/L, an IgG retention amount of 95%, and a GMP retention amount of 100%. After 12 months of freezing and then restoration, the indicators were stable, and there was neither fat floating nor gravel formation after boiling. After CIP, by detecting, the membrane flux returned to the value before use. The frozen freezing warehouse was frozen. After entering a quick-freezing warehouse and being frozen for 14 hours, the core temperature of the concentrated milk reached -8 °C.

### Example 3

1) After the raw milk arrived at a factory, physical and chemical indicators were tested, TS 12.7%, fat 3.1%, and protein 3.3%. The raw milk that meets the requirements was filtered to remove physical impurities, wherein the pore diameter of the first-stage filter was 1.00mm and the pore diameter of the second-stage filter was 0.50 mm.
2) After temporary storage, a sterilization and separation operation was performed on the raw milk, and then the raw milk was cooled to 7 °C and stored.
3) The raw milk entered a homogenizer for cold homogenization; the temperature was set to 13 °C, and the two-stage pressure was 170 bar in total, wherein the first-stage homogenization pressure was 120 bar and the second-stage homogenization pressure was 50 bar; and then the raw milk entered a sterilization separator to remove spores, and the spore separation rate was greater than 95%; and the total solid content in the obtained raw milk was 12.35%.
4) The raw milk entered a normal pressure reverse osmosis membrane treatment unit; the normal pressure reverse osmosis membrane module had 7 stages, wherein the first 3 stages used a low flow channel of 30mil and a pressure of 40bar, and the latter 4 stages used a middle flow channel of 45mil and a pressure of 50bar; the surface flow rate of the membrane was 5m/s; when the raw milk was concentrated to a total solid content of about 25%, it entered a high-pressure reverse osmosis membrane treatment unit which used a high flow channel of 65mil, a pressure of 80bar, and a membrane surface flow rate of 7m/s; the temperature in the reverse osmosis membrane had been maintained below 15 °C, through the high-pressure reverse osmosis part, the total solid content of the concentrated milk obtained was 44.3%; and then the concentrated milk entered a temporary storage tank of the concentrated milk.
5) The concentrated milk entered a storage tank and was continuously cooled, that is, the first-stage cooling; the temperature in the tank was controlled at 4 °C and an ice water at 1 °C was used as a refrigerant; and then the concentrated milk entered a low-temperature critical tube-type heat exchanger through a material pump, that is, the second-stage cooling; a 50% ethylene glycol aqueous solution at -5 °C was used as a refrigerant; the inlet temperature of the second-stage cooling was 4 °C, and the outlet temperature after cooling was -2.5 °C; and the concentrated milk passed through a cooled pipe with a jacket using ice water at 1 °C as a refrigerant and quickly reached a filling machine for filling.
6) The concentrated milk was filled into a customized sterile octagonal bag through a large bag filling machine, and the filling temperature was maintained at -2 °C.
7) The concentrated milk was packed into a cardboard box matched with the octagonal bag, and palletized into a quick-freezing warehouse; the temperature of the freezing warehouse was -22 °C and the oncoming wind speed was 7 m/s; after 18 hours of freezing, the core temperature reached -8 °C, and then it was transferred to a freezing warehouse with a temperature of -18 °C for storage, thereby obtaining frozen concentrated milk.
8) The cleaning process was the above-mentioned standard CIP cleaning.

Results: after the production by the above process, a stable light-yellow block frozen concentrated milk was obtained. By detecting before being cooled, the concentrated milk had a total solid content of 44.3%, a protein content of 10.61%, a fat content of 12.9%, a lactoferrin retention amount of 92%, a furosine content of 11.4mg/L, an IgG retention amount of 94%, and a GMP retention amount of 100%. After 12 months of freezing and then restoration, the indicators were stable, and there was neither fat floating nor gravel formation after boiling. After CIP, by detecting, the membrane flux returned to the value before use. The frozen freezing warehouse was frozen. After entering a quick-freezing warehouse and being frozen for 14 hours, the core temperature of the concentrated milk reached -8 °C.

### Comparative Example 1 (comparison between conventional homogenizer and low-temperature homogenizer)

1) After the raw milk arrived at a factory, physical and chemical indicators were tested, TS 12.5%, fat 3.0%, and protein 3.1%. The raw milk that meets the requirements was filtered to remove physical impurities, wherein the pore diameter of the first-stage filter was 1.00mm and the pore diameter of the second-stage filter was 0.50 mm.
2) After temporary storage, a sterilization and separation operation was performed on the raw milk, and then the raw milk was cooled to 7 °C and stored.
3) The raw milk entered a homogenizer for cold homogenization; the temperature was set to 22 °C, and the two-stage pressure was 170 bar in total, wherein the first-stage homogenization pressure was 120 bar and the second-stage homogenization pressure was 50 bar; and then the raw milk entered a sterilization separator to remove spores, and the spore separation rate was greater than 95%; and the total solid content in the obtained raw milk was 12.35%.
4) The raw milk entered a normal pressure reverse osmosis membrane treatment unit; the normal pressure reverse osmosis membrane module had 7 stages, wherein the first 3 stages used a low flow channel of 30mil and a pressure of 40bar, and the latter 4 stages used a middle flow channel of 45mil and a pressure of 50bar; the surface flow rate of the membrane was 5m/s; when the raw milk was concentrated to a total solid content of about 25%, it entered a high-pressure reverse osmosis membrane treatment unit which used a high flow channel of 65mil, a pressure of 80bar, and a membrane surface flow rate of 7m/s; the temperature in the reverse osmosis membrane had been maintained below 15 °C, through the high-pressure reverse osmosis part, the total solid content of the concentrated milk obtained was 43.1%; and then the concentrated milk entered a temporary storage tank of the concentrated milk.
5) The concentrated milk entered a storage tank and was continuously cooled, that is, the first-stage cooling; the temperature in the tank was controlled at 4 °C and an ice water at 1 °C was used as a refrigerant; and then the concentrated milk entered a low-temperature critical tube-type heat exchanger through a material pump, that is, the second-stage cooling; a 50% ethylene glycol aqueous solution at -5 °C was used as a refrigerant; the inlet temperature of the second-stage cooling was 4 °C, and the outlet temperature after cooling was -2.5 °C; and the concentrated milk passed through a cooled pipe with a jacket using ice water at 1 °C as a refrigerant and quickly reached a filling machine for filling.
6) The concentrated milk was filled into a customized sterile octagonal bag through a large bag filling machine, and the filling temperature was maintained at -2 °C.
7) The concentrated milk was packed into a cardboard box matched with the octagonal bag, and palletized into a quick-freezing warehouse; the temperature of the freezing warehouse was -22 °C and the oncoming wind speed was 7 m/s; after 18 hours of freezing, the core temperature reached -8 °C, and then it was transferred to a freezing warehouse with a temperature of -18 °C for storage, thereby obtaining frozen concentrated milk.
8) The cleaning process was the above-mentioned standard CIP cleaning.

Results: by detecting, the total solid content of the product was 43.1%, the protein content was 10.22%, the fat content was 12.30%, the furosine content was 11.1 mg/L, the IgG retention amount was 93%, and the GMP retention amount was 100%. The detecting results met the requirements of the product, but the proliferation of microorganisms was serious, the total number of colonies was 1080000 CFU/mL (g), the pH of the product was too low, a pH value of 5.90 did not comply with relevant regulations, and it was easy to agglomerate when exposed to high temperature.

### Comparative Example 2 (the filling temperature is not sufficient without using ethylene glycol in the second-stage cooling)

1) After the raw milk arrived at a factory, physical and chemical indicators were tested, TS 12.43%, fat 3.2%, and protein 3.1%. The raw milk that meets the requirements was filtered to remove physical impurities, wherein the pore diameter of the first-stage filter was 1.00mm and the pore diameter of the second-stage filter was 0.50 mm.
2) After temporary storage, a sterilization and separation operation was performed on the raw milk, and then the raw milk was cooled to 7 °C and stored.
3) The raw milk entered a homogenizer for cold homogenization; the temperature was set to 13 °C, and the two-stage pressure was 170 bar in total, wherein the first-stage homogenization pressure was 120 bar and the second-stage homogenization pressure was 50 bar; and then the raw milk entered a sterilization separator to remove spores, and the spore separation rate was greater than 95%; and the total solid content in the obtained raw milk was 12.35%.
4) The raw milk entered a normal pressure reverse osmosis membrane treatment unit; the normal pressure reverse osmosis membrane module had 7 stages, wherein the first 3 stages used a low flow channel of 30mil and a pressure of 40bar, and the latter 4 stages used a middle flow channel of 45mil and a pressure of 50bar; the surface flow rate of the membrane was 5m/s; when the raw milk was concentrated to a total solid content of about 25%, it entered a high-pressure reverse osmosis membrane treatment unit which used a high flow channel of 65mil, a pressure of 80bar, and a membrane surface flow rate of 7m/s; the temperature in the reverse osmosis membrane had been maintained below 15 °C, through the high-pressure reverse osmosis part, the total solid content of the concentrated milk obtained was 42.1%; and then the concentrated milk entered a temporary storage tank of the concentrated milk.
5) The concentrated milk entered a storage tank and was continuously cooled, that is, the first-stage cooling; the temperature in the tank was controlled at 4 °C and an ice water at 1 °C was used as a refrigerant; and then the concentrated milk entered a low-temperature critical tube-type heat exchanger through a material pump, that is, the second-stage cooling; an ice water at 1 °C was used as a refrigerant; the inlet temperature of the second-stage cooling was 4 °C, and the outlet temperature after cooling was 3.5 °C; and the concentrated milk passed through a cooled pipe with a jacket using ice water at 1 °C as a refrigerant and quickly reached a filling machine for filling.
6) The concentrated milk was filled into a customized sterile octagonal bag through a large bag filling machine, and the filling temperature was maintained at -2 °C.
7) The concentrated milk was packed into a cardboard box matched with the octagonal bag, and palletized into a quick-freezing warehouse; the temperature of the freezing warehouse was -22 °C and the oncoming wind speed was 7 m/s; after 18 hours of freezing, the core temperature reached -8 °C, and then it was transferred to a freezing warehouse with a temperature of -18 °C for storage, thereby obtaining frozen concentrated milk.
8) The cleaning process was the above-mentioned standard CIP cleaning.

Results: by detecting, the total solid content of the product was 42.1%, the protein content was 10.43%, the fat content was 12.40%, the furosine content was 10.9 mg/L, the IgG retention amount was 95%, and the GMP retention amount was 100%. The detecting results met the requirements of the product, but no ethylene glycol aqueous solution was used in the second stage cooling. When the concentrated milk product entered a quick-freezing warehouse, the temperature was too high to meet the standards; the concentrated milk frozen too slowly, the fat floated up, and the system was unstable; after reconstitution, the product was separated into layers, and the psychrophilic bacteria proliferated rapidly, 380 CFU/mL (g), which affected the flavor of the product.

### Comparative Example 3 (comparison of the temperature and cost in quick-freezing warehouse)

1) After the raw milk arrived at a factory, physical and chemical indicators were tested, TS 12.60%, fat 3.3%, and protein 3.2%. The raw milk that meets the requirements was filtered to remove physical impurities, wherein the pore diameter of the first-stage filter was 1.00mm and the pore diameter of the second-stage filter was 0.50 mm.
2) After temporary storage, a sterilization and separation operation was performed on the raw milk, and then the raw milk was cooled to 7 °C and stored.
3) The raw milk entered a homogenizer for cold homogenization; the temperature was set to 13 °C, and the two-stage pressure was 170 bar in total, wherein the first-stage homogenization pressure was 120 bar and the second-stage homogenization pressure was 50 bar; and then the raw milk entered a sterilization separator to remove spores, and the spore separation rate was greater than 95%; and the total solid content in the obtained raw milk was 12.35%.
4) The raw milk entered a normal pressure reverse osmosis membrane treatment unit; the normal pressure reverse osmosis membrane module had 7 stages, wherein the first 3 stages used a low flow channel of 30mil and a pressure of 40bar, and the latter 4 stages used a middle flow channel of 45mil and a pressure of 50bar; the surface flow rate of the membrane was 5m/s; when the raw milk was concentrated to a total solid content of about 25%, it entered a high-pressure reverse osmosis membrane treatment unit which used a high flow channel of 65mil, a pressure of 80bar, and a membrane surface flow rate of 7m/s; the temperature in the reverse osmosis membrane had been maintained below 15 °C, through the high-pressure reverse osmosis part, the total solid content of the concentrated milk obtained was 42.2%; and then the concentrated milk entered a temporary storage tank of the concentrated milk.
5) The concentrated milk entered a storage tank and was continuously cooled, that is, the first-stage cooling; the temperature in the tank was controlled at 4 °C and an ice water at 1 °C was used as a refrigerant; and then the concentrated milk entered a low-temperature critical tube-type heat exchanger through a material pump, that is, the second-stage cooling; a 50% ethylene glycol aqueous solution at -5 °C was used as a refrigerant; the inlet temperature of the second-stage cooling was 4 °C, and the outlet temperature after cooling was -2.5 °C; and the concentrated milk passed through a cooled pipe with a jacket using ice water at 1 °C as a refrigerant and quickly reached a filling machine for filling.
6) The concentrated milk was filled into a customized sterile octagonal bag through a large bag filling machine, and the filling temperature was maintained at -2 °C.
7) The concentrated milk was packed into a cardboard box matched with the octagonal bag, and palletized into a quick-freezing warehouse; the temperature of the freezing warehouse was -40 °C and the oncoming wind speed was 7 m/s; after 18 hours of freezing, the core temperature reached -8 °C, and then it was transferred to a freezing warehouse with a temperature of -18 °C for storage, thereby obtaining frozen concentrated milk.
8) The cleaning process was the above-mentioned standard CIP cleaning.

Results: by detecting, the total solid content of the product was 42.2%, the protein content was 9.98%, the fat content was 11.50%, the furosine content was 13.1 mg/L, the IgG retention amount was 94%, and the GMP retention amount was 100%. The detecting results met the requirements of the product. The concentrated milk was produced normally, was frozen faster, and can be quickly transported off-site into the warehouse. The indicators were stable, and there was neither fat floating nor gravel formation after boiling. However, the energy consumption of the factory was twice that of Example 1, which wasted energy and increased the factory's carbon emissions.

### Comparative Example 4 (Concentration using only conventional RO membrane)

1) After the raw milk arrived at a factory, physical and chemical indicators were tested, TS 12.53%, fat 3.5%, and protein 3.3%. The raw milk that meets the requirements was filtered to remove physical impurities, wherein the pore diameter of the first-stage filter was 1.00mm and the pore diameter of the second-stage filter was 0.50 mm.
2) After temporary storage, a sterilization and separation operation was performed on the raw milk, and then the raw milk was cooled to 7 °C and stored.
3) The raw milk entered a homogenizer for cold homogenization; the temperature was set to 13 °C, and the two-stage pressure was 170 bar in total, wherein the first-stage homogenization pressure was 120 bar and the second-stage homogenization pressure was 50 bar; and then the raw milk entered a sterilization separator to remove spores, and the spore separation rate was greater than 95%; and the total solid content in the obtained raw milk was 12.35%.
4) The raw milk entered a normal pressure reverse osmosis membrane treatment unit; the normal pressure reverse osmosis membrane module had 7 stages, wherein the first 3 stages used a low flow channel of 30mil and a pressure of 40bar, and the latter 4 stages used a middle flow channel of 45mil and a pressure of 50bar; the surface flow rate of the membrane was 5m/s; when the raw milk was concentrated to a total solid content of about 25%, it entered a temporary storage tank of the concentrated milk.
5) The concentrated milk entered a storage tank and was continuously cooled, that is, the first-stage cooling; the temperature in the tank was controlled at 4 °C and an ice water at 1 °C was used as a refrigerant; and then the concentrated milk entered a low-temperature critical tube-type heat exchanger through a material pump, that is, the second-stage cooling; a 50% ethylene glycol aqueous solution at -5 °C was used as a refrigerant; the inlet temperature of the second-stage cooling was 4 °C, and the outlet temperature after cooling was -2.5 °C; and the concentrated milk passed through a cooled pipe with a jacket using ice water at 1 °C as a refrigerant and quickly reached a filling machine for filling.
6) The concentrated milk was filled into a customized sterile octagonal bag through a large bag filling machine, and the filling temperature was maintained at -2 °C.
7) The concentrated milk was packed into a cardboard box matched with the octagonal bag, and palletized into a quick-freezing warehouse; the temperature of the freezing warehouse was -22 °C and the oncoming wind speed was 7 m/s; after 18 hours of freezing, the core temperature reached -8 °C, and then it was transferred to a freezing warehouse with a temperature of -18 °C for storage, thereby obtaining frozen concentrated milk.
8) The cleaning process was the above-mentioned standard CIP cleaning.

By detecting, the total solid content of the product was 25%, the protein content was 5.62%, and the fat content was 6.30%. Compared with Example 1, the comparative example of using conventional reverse osmosis technology to produce concentrated milk failed to meet the requirements for producing concentrated milk with 35-45% total solids. At the same time, the fat content, the protein content, the lactoferrin content, the furosine content, the IgG content, and the GMP content did not meet the standards.

### Comparative Example 5 (comparison between conventional heat exchanger and low temperature critical tube-type heat exchanger)

1) After the raw milk arrived at a factory, physical and chemical indicators were tested, TS 12.21%, fat 3.3%, and protein 3.15%. The raw milk that meets the requirements was filtered to remove physical impurities, wherein the pore diameter of the first-stage filter was 1.00mm and the pore diameter of the second-stage filter was 0.50 mm.
2) After temporary storage, a sterilization and separation operation was performed on the raw milk, and then the raw milk was cooled to 7 °C and stored.
3) The raw milk entered a homogenizer for cold homogenization; the temperature was set to 13 °C, and the two-stage pressure was 170 bar in total, wherein the first-stage homogenization pressure was 120 bar and the second-stage homogenization pressure was 50 bar; and then the raw milk entered a sterilization separator to remove spores, and the spore separation rate was greater than 95%; and the total solid content in the obtained raw milk was 12.35%.
4) The raw milk entered a normal pressure reverse osmosis membrane treatment unit; the normal pressure reverse osmosis membrane module had 7 stages, wherein the first 3 stages used a low flow channel of 30mil and a pressure of 40bar, and the latter 4 stages used a middle flow channel of 45mil and a pressure of 50bar; the surface flow rate of the membrane was 5m/s; when the raw milk was concentrated to a total solid content of about 25%, it entered a high-pressure reverse osmosis membrane treatment unit which used a high flow channel of 65mil, a pressure of 80bar, and a membrane surface flow rate of 7m/s; the temperature in the reverse osmosis membrane had been maintained below 15 °C, through the high-pressure reverse osmosis part, the total solid content of the concentrated milk obtained was 40.2%; and then the concentrated milk entered a temporary storage tank of the concentrated milk.
5) The concentrated milk entered a storage tank and was continuously cooled, that is, the first-stage cooling; the temperature in the tank was controlled at 4 °C and an ice water at 1 °C was used as a refrigerant; and then the concentrated milk entered a conventional tube-type heat exchanger through a material pump, that is, the second-stage cooling; a 50% ethylene glycol aqueous solution at -5 °C was used as a refrigerant; the inlet temperature of the second-stage cooling was 4 °C, and the outlet temperature after cooling was -2.5 °C; and the concentrated milk passed through a cooled pipe with a jacket using ice water at 1 °C as a refrigerant and quickly reached a filling machine for filling.
6) The concentrated milk was filled into a customized sterile octagonal bag through a large bag filling machine, and the filling temperature was maintained at -2 °C.
7) The concentrated milk was packed into a cardboard box matched with the octagonal bag, and palletized into a quick-freezing warehouse; the temperature of the freezing warehouse was -22 °C and the oncoming wind speed was 7 m/s; after 18 hours of freezing, the core temperature reached -8 °C, and then it was transferred to a freezing warehouse with a temperature of -18 °C for storage, thereby obtaining frozen concentrated milk.
8) The cleaning process was the above-mentioned standard CIP cleaning.

Results: by detecting, the total solid content of the product was 40.2%, the protein content was 9.22%, the fat content was 10.50%, the furosine content was 14.6 mg/L, the IgG retention amount was 94%, and the GMP retention amount was 100%. The detecting results met the requirements of the product. Compared with the low-temperature critical tube-type heat exchanger, the conventional tube-type heat exchanger had fewer flow channels, a slower refrigerant flow rate, and a slower material flow rate, which resulted in blockage of the heat exchanger and failed to obtain concentrated milk products.

### Comparative Example 6 (not cleaned according to the CIP process)

1) After the raw milk arrived at a factory, physical and chemical indicators were tested, TS 12.54%, fat 3.4%, and protein 3.2%. The raw milk that meets the requirements was filtered to remove physical impurities, wherein the pore diameter of the first-stage filter was 1.00mm and the pore diameter of the second-stage filter was 0.50 mm.
2) After temporary storage, a sterilization and separation operation was performed on the raw milk, and then the raw milk was cooled to 7 °C and stored.
3) The raw milk entered a homogenizer for cold homogenization; the temperature was set to 13 °C, and the two-stage pressure was 170 bar in total, wherein the first-stage homogenization pressure was 120 bar and the second-stage homogenization pressure was 50 bar; and then the raw milk entered a sterilization separator to remove spores, and the spore separation rate was greater than 95%; and the total solid content in the obtained raw milk was 12.35%.
4) The raw milk entered a normal pressure reverse osmosis membrane treatment unit; the normal pressure reverse osmosis membrane module had 7 stages, wherein the first 3 stages used a low flow channel of 30mil and a pressure of 40bar, and the latter 4 stages used a middle flow channel of 45mil and a pressure of 50bar; the surface flow rate of the membrane was 5m/s; when the raw milk was concentrated to a total solid content of about 25%, it entered a high-pressure reverse osmosis membrane treatment unit which used a high flow channel of 65mil, a pressure of 80bar, and a membrane surface flow rate of 7m/s; the temperature in the reverse osmosis membrane had been maintained below 15 °C, through the high-pressure reverse osmosis part, the total solid content of the concentrated milk obtained was 44.2%; and then the concentrated milk entered a temporary storage tank of the concentrated milk.
5) The concentrated milk entered a storage tank and was continuously cooled, that is, the first-stage cooling; the temperature in the tank was controlled at 4 °C and an ice water at 1 °C was used as a refrigerant; and then the concentrated milk entered a low-temperature critical tube-type heat exchanger through a material pump, that is, the second-stage cooling; a 50% ethylene glycol aqueous solution at -5 °C was used as a refrigerant; the inlet temperature of the second-stage cooling was 4 °C, and the outlet temperature after cooling was -2.5 °C; and the concentrated milk passed through a cooled pipe with a jacket using ice water at 1 °C as a refrigerant and quickly reached a filling machine for filling.
6) The concentrated milk was filled into a customized sterile octagonal bag through a large bag filling machine, and the filling temperature was maintained at -2 °C.
7) The concentrated milk was packed into a cardboard box matched with the octagonal bag, and palletized into a quick-freezing warehouse; the temperature of the freezing warehouse was -22 °C and the oncoming wind speed was 7 m/s; after 18 hours of freezing, the core temperature reached -8 °C, and then it was transferred to a freezing warehouse with a temperature of -18 °C for storage, thereby obtaining frozen concentrated milk.
8) The cleaning process was not the above-mentioned standard CIP cleaning.

Results: by detecting, the total solid content of the product was 44.2%, the protein content was 11.02%, the fat content was 12.70%, the furosine content was 14.6 mg/L, the IgG retention amount was 95%, and the GMP retention amount was 100%. The detecting results met the requirements of the product. After the concentration module was cleaned, the flux was detected, and the flux did not reach the flux before production. After dismantling the membrane shell, it was found that there was obvious fouling on the surface of the thick membrane, which will affect the next production.

### Comparative Example 7 (using only high-pressure RO technology)

1) After the raw milk arrived at a factory, physical and chemical indicators were tested, TS 13.5%, fat 3.0%, and protein 3.3%. The raw milk that meets the requirements was filtered to remove physical impurities, wherein the pore diameter of the first-stage filter was 1.00mm and the pore diameter of the second-stage filter was 0.50 mm.
2) After temporary storage, a sterilization and separation operation was performed on the raw milk, and then the raw milk was cooled to 7 °C and stored.
3) The raw milk entered a homogenizer for cold homogenization; the temperature was set to 13 °C, and the two-stage pressure was 170 bar in total, wherein the first-stage homogenization pressure was 120 bar and the second-stage homogenization pressure was 50 bar; and then the raw milk entered a sterilization separator to remove spores, and the spore separation rate was greater than 95%; and the total solid content in the obtained raw milk was 12.35%.
4) The raw milk directly entered a high-pressure reverse osmosis membrane treatment unit which used a high flow channel of 65mil, a pressure of 80bar, and a membrane surface flow rate of 7m/s; the temperature in the reverse osmosis membrane had been maintained below 15 °C, through the high-pressure reverse osmosis part, the total solid content of the concentrated milk obtained was 36.5%; and then the concentrated milk entered a temporary storage tank of the concentrated milk.
5) The concentrated milk entered a storage tank and was continuously cooled, that is, the first-stage cooling; the temperature in the tank was controlled at 4 °C and an ice water at 1 °C was used as a refrigerant; and then the concentrated milk entered a low-temperature critical tube-type heat exchanger through a material pump, that is, the second-stage cooling; a 50% ethylene glycol aqueous solution at -5 °C was used as a refrigerant; the inlet temperature of the second-stage cooling was 4 °C, and the outlet temperature after cooling was -2.5 °C; and the concentrated milk passed through a cooled pipe with a jacket using ice water at 1 °C as a refrigerant and quickly reached a filling machine for filling.
6) The concentrated milk was filled into a customized sterile octagonal bag through a large bag filling machine, and the filling temperature was maintained at -2 °C.
7) The concentrated milk was packed into a cardboard box matched with the octagonal bag, and palletized into a quick-freezing warehouse; the temperature of the freezing warehouse was -22 °C and the oncoming wind speed was 7 m/s; after 18 hours of freezing, the core temperature reached -8 °C, and then it was transferred to a freezing warehouse with a temperature of -18 °C for storage, thereby obtaining frozen concentrated milk.
8) The cleaning process was the above-mentioned standard CIP cleaning.

Results: by detecting, the total solid content of the product was 36.5%, the protein content was 8.05%, the fat content was 8.33%, the furosine content was 50.5 mg/L, the IgG retention amount was 95%, and the GMP retention amount was 90%. The detecting results failed to meet the requirements of the product. Compared with the processes of the examples, the membrane flux of the membrane concentration device decreased rapidly. After cleaning, it was found that the membrane surface was seriously fouled and failed to produce concentrated milk that met the requirements.

### Comparative Example 8 (using single-stage concentration)

1) After the raw milk arrived at a factory, physical and chemical indicators were tested, TS 12.7%, fat 3.1%, and protein 3.2%. The raw milk that meets the requirements was filtered to remove physical impurities, wherein the pore diameter of the first-stage filter was 1.00mm and the pore diameter of the second-stage filter was 0.50 mm.
2) After temporary storage, a sterilization and separation operation was performed on the raw milk, and then the raw milk was cooled to 7 °C and stored.
3) The raw milk entered a homogenizer for cold homogenization; the temperature was set to 13 °C, and the two-stage pressure was 170 bar in total, wherein the first-stage homogenization pressure was 120 bar and the second-stage homogenization pressure was 50 bar; and then the raw milk entered a sterilization separator to remove spores, and the spore separation rate was greater than 95%; and the total solid content in the obtained raw milk was 12.35%.
4) The raw milk entered a normal pressure reverse osmosis membrane treatment unit; the normal pressure reverse osmosis membrane module had one stage which used a middle flow channel of 45mil, a pressure of 50bar, and a membrane surface flow rate of 5m/s; when the raw milk was concentrated to a total solid content of about 25%, it entered a high-pressure reverse osmosis membrane treatment unit with one stage in total which used a high flow channel of 65mil, a pressure of 80bar, and a membrane surface flow rate of 7m/s; the temperature in the reverse osmosis membrane had been maintained below 15 °C, through the high-pressure reverse osmosis part, the total solid content of the concentrated milk obtained was 42.3%; and then the concentrated milk entered a temporary storage tank of the concentrated milk.
5) The concentrated milk entered a storage tank and was continuously cooled, that is, the first-stage cooling; the temperature in the tank was controlled at 4 °C and an ice water at 1 °C was used as a refrigerant; and then the concentrated milk entered a low-temperature critical tube-type heat exchanger through a material pump, that is, the second-stage cooling; a 50% ethylene glycol aqueous solution at -5 °C was used as a refrigerant; the inlet temperature of the second-stage cooling was 4 °C, and the outlet temperature after cooling was -2.5 °C; and the concentrated milk passed through a cooled pipe with a jacket using ice water at 1 °C as a refrigerant and quickly reached a filling machine for filling.
6) The concentrated milk was filled into a customized sterile octagonal bag through a large bag filling machine, and the filling temperature was maintained at -2 °C.
7) The concentrated milk was packed into a cardboard box matched with the octagonal bag, and palletized into a quick-freezing warehouse; the temperature of the freezing warehouse was -22 °C and the oncoming wind speed was 7 m/s; after 18 hours of freezing, the core temperature reached -8 °C, and then it was transferred to a freezing warehouse with a temperature of -18 °C for storage, thereby obtaining frozen concentrated milk.
8) The cleaning process was the above-mentioned standard CIP cleaning.

Results: by detecting, the total solid content of the product was 42.3%, the protein content was 10.42%, the fat content was 11.90%, the furosine content was 17.5 mg/L, the IgG retention amount was 94%, and the GMP retention amount was 100%. The detecting results met the requirements of the product. Compared with the concentration processes of the examples, the pre-concentration time of the concentrated milk production increased, the membrane flux dropped sharply after 5 hours of production, and the production was stopped. The fouling of the membrane surface was found to be serious when cleaning.

## Claims

1. A method for concentrating dairy products, comprising a step of performing reverse osmosis concentration treatment on raw milk using a reverse osmosis membrane; the reverse osmosis concentration treatment comprises a low-pressure reverse osmosis membrane concentration treatment and a high-pressure reverse osmosis membrane concentration treatment;
wherein the low-pressure reverse osmosis membrane concentration treatment uses a first predetermined pressure to perform reverse osmosis concentration treatment on feed, and the high-pressure reverse osmosis membrane concentration treatment uses a second predetermined pressure to perform reverse osmosis concentration treatment on feed, wherein the first predetermined pressure is less than the second predetermined pressure.

2. The concentration method according to claim 1, wherein the low-pressure reverse osmosis membrane treatment comprises a multi-stage concentration treatment (preferably a 1- to 14-stage concentration treatment, more preferably a 6- to 11-stage concentration treatment); preferably, each stage of the low-pressure reverse osmosis membrane treatment uses one or more membrane assemblies; more preferably, each membrane assembly comprises one membrane or more membranes which are connected in series, in parallel, or in a combination of series and parallel.

3. The concentration method according to claim 2, wherein the pressure used in each stage of the multi-stage concentration treatment of the low-pressure reverse osmosis membrane treatment is different; preferably, in the low-pressure reverse osmosis membrane treatment, the pressure used in the first three stages is 1 to 50 bar (preferably 1 to 40 bar, more preferably 25 to 35 bar); preferably, in the low-pressure reverse osmosis membrane treatment, the pressure used in the fourth and subsequent stages is 30 to 60 bar (preferably 40 to 50 bar, more preferably 43 to 47 bar).

4. The concentration method according to any one of claims 1 to 3, wherein the high-pressure reverse osmosis membrane treatment comprises a multi-stage concentration treatment (preferably a 1- to 6-stage concentration treatment, more preferably a 2- to 4-stage concentration treatment); preferably, each stage of the high-pressure reverse osmosis membrane treatment uses one or more membrane assemblies; more preferably, each membrane assembly comprises one membrane or more membranes which are connected in series, in parallel, or in a combination of series and parallel.

5. The concentration method according to claim 4, wherein the pressure used in each stage of the multi-stage concentration treatment of the high-pressure reverse osmosis membrane treatment is different; preferably, the pressure used in the high-pressure reverse osmosis membrane treatment is 50 to 200 bar (preferably 60 to 80 bar, more preferably 60 to 65 bar).

6. The concentration method according to any one of claims 1 to 5, wherein the temperature of a feed liquid to be concentrated in the concentration method is 20 °C or lower (preferably 0 to 15 °C, more preferably 7 to 15 °C);
preferably, the temperature of the concentrated feed liquid is maintained below 15 °C (more preferably, maintained at 10 to 14 °C) by a high-pressure radiator; preferably, the high-pressure radiator is arranged at a feed port or a discharge port of the predetermined stage(s) of the high-pressure reverse osmosis membrane treatment unit.

7. The concentration method according to any one of claims 1 to 6, wherein before the step of the reverse osmosis concentration treatment, further comprising: i) a temporary storage step; ii) a pretreatment step; and/or iii) a homogenization step.

8. The concentration method according to claim 7, wherein the temporary storage step comprises filtration of the raw milk; preferably, the filtration is two-stage filtration; more preferably, the filtration pore diameter of the first-stage filtration is 0.990 mm to 1.165 mm, and the pore diameter of the second-stage filtration is 0.495 mm to 0.589 mm.

9. The concentration method according to claim 7, wherein the pretreatment step comprises a low-temperature sterilization and separation treatment; preferably, the low-temperature sterilization and separation uses two-stage filtration; preferably, a temperature of the sterilization and separation is controlled at 45 to 50 °C.

10. The concentration method according to claim 7, wherein the homogenization step uses two-stage homogenization; preferably, a working temperature of the homogenization step is maintained at 10 to 30 °C (more preferably 15 to 20 °C), more preferably, a pressure of the first-stage homogenization is 100 to 140 bar (more preferably 120 bar), and a pressure of the second-stage homogenization is 40 to 60 bar (more preferably 50 bar).

11. The concentration method according to any one of claims 1 to 10, wherein after the step of the reverse osmosis concentration treatment, further comprising: v) a cooling step; vi) a filling step; vii) a freezing step; and/or viii) cleaning step.

12. The concentration method according to claim 11, wherein the cooling step uses two-stage cooling; preferably, the first stage of the cooling uses an ice water as a refrigerant; preferably, the second stage of the cooling uses a solution of ethylene glycol in water as a refrigerant.

13. The concentration method according to claim 11, wherein preferably, the temperature of the first stage of the cooling is maintained at 2 to 10 °C (more preferably 4 to 7 °C); preferably, the temperature of the second stage of the cooling is maintained at -1 to -4 °C (more preferably -2 to -3 °C).

14. The concentration method according to claim 11, wherein the filling temperature of the filling step is maintained at 1 to -4 °C, more preferably -2 to -3 °C.

15. The concentration method according to claim 11, wherein the freezing temperature of the freezing step is maintained at -10 to -24 °C, more preferably -18 to -22 °C.

16. A concentrated dairy product prepared by the concentration method according to any one of claims 1 to 15, wherein the total solid content is 30 to 50%, preferably 35 to 45%, more preferably 40 to 45%;
preferably, after the concentrated dairy product is diluted to the total solid content level of raw milk according to a concentration ratio, the detected furosine content is 4 to 20 mg/100g protein, preferably 8 to 15 mg/100g protein;
preferably, after the concentrated dairy product is diluted to the total solid content level of raw milk according to a concentration ratio, the detected retention amount of IgG (immunoglobulin G) is higher than 95%;
preferably, after the concentrated dairy product is diluted to the total solid content level of raw milk according to a concentration ratio, the detected retention rate of GMP (glycomacropeptide) is 100%.

17. A feed liquid concentration device, comprising:
a temporary storage unit, which comprises a storage container to store feed liquids to be concentrated;
a homogenization unit, which is arranged downstream of the temporary storage unit, and
applies a predetermined temperature and pressure to the feed liquids, so that the feed liquids are refined and mixed with each other more uniformly under the action of pressure and impact; and
a concentration unit, which is arranged downstream of the homogenization unit and
successively comprises a low-pressure concentration unit and a high-pressure concentration unit, wherein the low-pressure concentration unit performs a reverse osmosis concentration treatment on the feed liquids flowing therethrough at a first predetermined pressure, and the high-pressure concentration unit performs a reverse osmosis concentration treatment on the feed liquids flowing therethrough at a second predetermined pressure, wherein the first predetermined pressure is less than the second predetermined pressure.

18. The feed liquid concentration device according to claim 17, wherein the low-pressure concentration unit comprises a plurality of stages, and each stage of the low-pressure concentration unit comprises one or more membrane assemblies, and each membrane assembly comprises one membrane or more membranes which are connected in series, in parallel, or in a combination of series and parallel.

19. The feed liquid concentration device according to claim 18, wherein the pressures in various stages of the multi-stage low-pressure concentration unit are different.

20. The feed liquid concentration device according to claim 19, wherein the concentration unit further comprises a low-pressure heat exchanger, which is arranged at a feed port or a discharge port of the predetermined stage(s) of the low-pressure concentration unit to maintain the temperature of the concentrated feed liquid below 15 °C.

21. The feed liquid concentration device according to any one of claims 17 to 20, wherein the high-pressure concentration unit comprises a plurality of stages, and each stage of the high-pressure concentration unit comprises one or more membrane assemblies, and each membrane assembly comprises one membrane or more membranes which are connected in series, in parallel or in a combination of series and parallel.

22. The feed liquid concentration device according to claim 21, wherein the pressures in various stages of the multi-stage high-pressure concentration unit are different.

23. The feed liquid concentration device according to claim 22, wherein the concentration unit further comprises a high-pressure heat exchanger, which is arranged at a feed port or a discharge port of the predetermined stage(s) of the high-pressure concentration unit to maintain the temperature of the concentrated feed liquid below 15 °C.

24. The feed liquid concentration device according to claim 17, further comprising: a pretreatment unit, which is arranged downstream of the temporary storage unit and upstream of the homogenization unit to perform pretreatment of the feed liquid from the temporary storage unit.

25. The feed liquid concentration device according to claim 24, wherein the pretreatment unit comprises a low-temperature sterilization unit to remove bacteria and/or microbial spores in the feed liquid.

26. The feed liquid concentration device according to claim 17, further comprising: a cooling unit, which cools the feed liquid concentrated by the concentration unit.

27. The feed liquid concentration device according to claim 26, wherein the cooling unit comprises a first cooling unit and a second cooling unit, wherein the first cooling unit cools the feed liquid to the first cooling temperature, and the second cooling unit further cools the feed liquid cooled by the first cooling unit to a second cooling temperature lower than the first cooling temperature.

28. The feed liquid concentration device according to claim 27, wherein the first cooling unit comprises a jacketed tank, which comprises a refrigerant liquid chamber to contain a refrigerant liquid.

29. The feed liquid concentration device according to claim 27, wherein the second cooling unit comprises a low-temperature critical tube-type heat exchanger.

30. The feed liquid concentration device according to claim 17, further comprising a filling unit, which fills the feed liquid cooled by the cooling unit into a predetermined package.

31. The feed liquid concentration device according to claim 17, further comprising a cleaning unit, which cleans the feed liquid concentration device after the feed liquid concentration is completed.

## Amended claims

### Amended claims under Art. 19.1 PCT

1. A method for concentrating dairy products, comprising a step of performing reverse osmosis concentration treatment on raw milk using a reverse osmosis membrane; the reverse osmosis concentration treatment comprises a low-pressure reverse osmosis membrane concentration treatment and a high-pressure reverse osmosis membrane concentration treatment;
wherein the low-pressure reverse osmosis membrane concentration treatment uses a first predetermined pressure to perform reverse osmosis concentration treatment on feed, and the high-pressure reverse osmosis membrane concentration treatment uses a second predetermined pressure to perform reverse osmosis concentration treatment on feed, wherein the first predetermined pressure is less than the second predetermined pressure.

2. The concentration method according to claim 1, wherein the low-pressure reverse osmosis membrane treatment comprises a multi-stage concentration treatment (preferably a 1- to 14-stage concentration treatment, more preferably a 6- to 11-stage concentration treatment); preferably, each stage of the low-pressure reverse osmosis membrane treatment uses one or more membrane assemblies; more preferably, each membrane assembly comprises one membrane or more membranes which are connected in series, in parallel, or in a combination of series and parallel.

3. The concentration method according to claim 2, wherein the pressure used in each stage of the multi-stage concentration treatment of the low-pressure reverse osmosis membrane treatment is different; preferably, in the low-pressure reverse osmosis membrane treatment, the pressure used in the first three stages is 1 to 50 bar (preferably 1 to 40 bar, more preferably 25 to 35 bar); preferably, in the low-pressure reverse osmosis membrane treatment, the pressure used in the fourth and subsequent stages is 30 to 60 bar (preferably 40 to 50 bar, more preferably 43 to 47 bar).

4. The concentration method according to any one of claims 1 to 3, wherein the high-pressure reverse osmosis membrane treatment comprises a multi-stage concentration treatment (preferably a 1- to 6-stage concentration treatment, more preferably a 2- to 4-stage concentration treatment); preferably, each stage of the high-pressure reverse osmosis membrane treatment uses one or more membrane assemblies; more preferably, each membrane assembly comprises one membrane or more membranes which are connected in series, in parallel, or in a combination of series and parallel.

5. The concentration method according to claim 4, wherein the pressure used in each stage of the multi-stage concentration treatment of the high-pressure reverse osmosis membrane treatment is different; preferably, the pressure used in the high-pressure reverse osmosis membrane treatment is 50 to 200 bar (preferably 60 to 80 bar, more preferably 60 to 65 bar).

6. The concentration method according to any one of claims 1 to 5, wherein the temperature of a feed liquid to be concentrated in the concentration method is 20 °C or lower (preferably 0 to 15 °C, more preferably 7 to 15 °C);
preferably, the temperature of the concentrated feed liquid is maintained below 15 °C (more preferably, maintained at 10 to 14 °C) by a high-pressure radiator; preferably, the high-pressure radiator is arranged at a feed port or a discharge port of the predetermined stage(s) of the high-pressure reverse osmosis membrane treatment unit.

7. The concentration method according to any one of claims 1 to 6, wherein before the step of the reverse osmosis concentration treatment, further comprising: i) a temporary storage step; ii) a pretreatment step; and/or iii) a homogenization step.

8. The concentration method according to claim 7, wherein the temporary storage step comprises filtration of the raw milk; preferably, the filtration is two-stage filtration; more preferably, the filtration pore diameter of the first-stage filtration is 0.990 mm to 1.165 mm, and the pore diameter of the second-stage filtration is 0.495 mm to 0.589 mm.

9. The concentration method according to claim 7, wherein the pretreatment step comprises a low-temperature sterilization and separation treatment; preferably, the low-temperature sterilization and separation uses two-stage filtration; preferably, a temperature of the sterilization and separation is controlled at 45 to 50 °C.

10. The concentration method according to claim 7, wherein the homogenization step uses two-stage homogenization; preferably, a working temperature of the homogenization step is maintained at 10 to 30 °C (more preferably 15 to 20 °C), more preferably, a pressure of the first-stage homogenization is 100 to 140 bar (more preferably 120 bar), and a pressure of the second-stage homogenization is 40 to 60 bar (more preferably 50 bar).

11. The concentration method according to any one of claims 1 to 10, wherein after the step of the reverse osmosis concentration treatment, further comprising: v) a cooling step; vi) a filling step; vii) a freezing step; and/or viii) cleaning step.

12. The concentration method according to claim 11, wherein the cooling step uses two-stage cooling; preferably, the first stage of the cooling uses an ice water as a refrigerant; preferably, the second stage of the cooling uses a solution of ethylene glycol in water as a refrigerant.

13. The concentration method according to claim 11, wherein preferably, the temperature of the first stage of the cooling is maintained at 2 to 10 °C (more preferably 4 to 7 °C); preferably, the temperature of the second stage of the cooling is maintained at -1 to -4 °C (more preferably -2 to -3 °C).

14. The concentration method according to claim 11, wherein the filling temperature of the filling step is maintained at 1 to -4 °C, more preferably -2 to -3 °C.

15. The concentration method according to claim 11, wherein the freezing temperature of the freezing step is maintained at -10 to -24 °C, more preferably -18 to -22 °C.

16. A concentrated dairy product prepared by the concentration method according to any one of claims 1 to 15, wherein the total solid content is 30 to 50%, preferably 35 to 45%, more preferably 40 to 45%;
preferably, after the concentrated dairy product is diluted to the total solid content level of raw milk according to a concentration ratio, the detected furosine content is 4 to 20 mg/100g protein, preferably 8 to 15 mg/100g protein;
preferably, after the concentrated dairy product is diluted to the total solid content level of raw milk according to a concentration ratio, the detected retention amount of IgG (immunoglobulin G) is higher than 95%;
preferably, after the concentrated dairy product is diluted to the total solid content level of raw milk according to a concentration ratio, the detected retention rate of GMP (glycomacropeptide) is 100%.

17. A feed liquid concentration device, comprising:
a concentration unit, which is arranged downstream of the homogenization unit and successively comprises a low-pressure concentration unit and a high-pressure concentration unit, wherein the low-pressure concentration unit performs a reverse osmosis concentration treatment on the feed liquids flowing therethrough at a first predetermined pressure, and the high-pressure concentration unit performs a reverse osmosis concentration treatment on the feed liquids flowing therethrough at a second predetermined pressure, wherein the first predetermined pressure is less than the second predetermined pressure.

18. The feed liquid concentration device according to claim 17, wherein the low-pressure concentration unit comprises a plurality of stages, and each stage of the low-pressure concentration unit comprises one or more membrane assemblies, and each membrane assembly comprises one membrane or more membranes which are connected in series, in parallel, or in a combination of series and parallel.

19. The feed liquid concentration device according to claim 18, wherein the pressures in various stages of the multi-stage low-pressure concentration unit are different.

20. The feed liquid concentration device according to claim 19, wherein the concentration unit further comprises a low-pressure heat exchanger, which is arranged at a feed port or a discharge port of the predetermined stage(s) of the low-pressure concentration unit to maintain the temperature of the concentrated feed liquid below 15 °C.

21. The feed liquid concentration device according to any one of claims 17 to 20, wherein the high-pressure concentration unit comprises a plurality of stages, and each stage of the high-pressure concentration unit comprises one or more membrane assemblies, and each membrane assembly comprises one membrane or more membranes which are connected in series, in parallel or in a combination of series and parallel.

22. The feed liquid concentration device according to claim 21, wherein the pressures in various stages of the multi-stage high-pressure concentration unit are different.

23. The feed liquid concentration device according to claim 22, wherein the concentration unit further comprises a high-pressure heat exchanger, which is arranged at a feed port or a discharge port of the predetermined stage(s) of the high-pressure concentration unit to maintain the temperature of the concentrated feed liquid below 15 °C.

24. The feed liquid concentration device according to any of claims 17 to 23, further comprising: a temporary storage unit, which is arranged upstream of the concentration unit and comprises a storage container to store feed liquids to be concentrated.

25. The feed liquid concentration device according to claim 24, further comprising: a pretreatment unit, which is arranged downstream of the temporary storage unit and upstream of the concentration unit to perform pretreatment of the feed liquid from the temporary storage unit.

26. The feed liquid concentration device according to claim 25, wherein the pretreatment unit comprises a low-temperature sterilization unit to remove bacteria and/or microbial spores in the feed liquid.

27. The feed liquid concentration device according to any of claims 24 to 26, further comprising: a homogenization unit, which is arranged downstream of the temporary storage unit and upstream of the concentration unit, and applies a predetermined temperature and pressure to the feed liquids, so that the feed liquids are refined and mixed with each other more uniformly under the action of pressure and impact.

28. The feed liquid concentration device according to any of claims 17 to 27, further comprising: a cooling unit, which is arranged downstream of the concentration unit to cool the feed liquid concentrated by the concentration unit.

29. The feed liquid concentration device according to claim 28, wherein the cooling unit comprises a first cooling unit and a second cooling unit, wherein the first cooling unit cools the feed liquid to the first cooling temperature, and the second cooling unit further cools the feed liquid cooled by the first cooling unit to a second cooling temperature lower than the first cooling temperature.

30. The feed liquid concentration device according to claim 29, wherein the first cooling unit comprises a jacketed tank, which comprises a refrigerant liquid chamber to contain a refrigerant liquid.

31. The feed liquid concentration device according to claim 29, wherein the second cooling unit comprises a low-temperature critical tube-type heat exchanger.

32. The feed liquid concentration device according to any of claims 17 to 31, further comprising a filling unit, which fills the feed liquid cooled by the cooling unit into a predetermined package.

33. The feed liquid concentration device according to any of claims 17 to 32, further comprising a cleaning unit, which cleans the feed liquid concentration device after the feed liquid concentration is completed.

34. The feed liquid concentration device according to any of claims 17 to 33, wherein the feed liquid is cow milk.
